(19) Europäisches Patentamt
European Patent Office
Office européen des brevets

(11) **EP 3 006 976 A1**

(12) **EUROPEAN PATENT APPLICATION**
published in accordance with Art. 153(4) EPC

(43) Date of publication:
**13.04.2016 Bulletin 2016/15**

(51) Int Cl.:
***G02B 13/04*** *(2006.01)*     ***G02B 13/18*** *(2006.01)*

(21) Application number: **14805009.9**

(22) Date of filing: **19.05.2014**

(86) International application number:
**PCT/JP2014/063152**

(87) International publication number:
**WO 2014/192567 (04.12.2014 Gazette 2014/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.05.2013   JP 2013111766**

(71) Applicant: **Sony Corporation**
**Tokyo 108-0075 (JP)**

(72) Inventor: **KATSURAGI Daigo**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **IMAGE PICKUP LENS, CAMERA MODULE, AND IMAGE PICKUP DEVICE**

(57)    The present technology relates to an imaging lens, a camera module, and an imaging apparatus that make it possible to obtain an imaging lens that has a small size and excellent optical performance. Provided is an imaging lens including a front group placed on an object side, a rear group placed on an imaging surface side, and a diaphragm placed between the front group and the rear group. The front group includes at least one lens having negative refractive power and at least one lens having positive refractive power, and the rear group includes at least one lens having negative refractive power. A lens surface closest to an imaging surface has an aspheric shape with an inflection point. Furthermore, a difference between a maximum value of an Abbe number of the lens having negative refractive power of the front group and a minimum value of an Abbe number of the lens having positive refractive power of the front group is larger than 14. Thus, an imaging lens that has a small size and excellent optical performance is implemented. The present technology can be applied to an imaging lens.

**FIG. 1**

Printed by Jouve, 75001 PARIS (FR)

**Description**

Technical Field

The present technology relates to an imaging lens, a camera module, and an imaging apparatus, and particularly relates to an imaging lens, a camera module, and an imaging apparatus that are allowed to have small sizes and excellent optical performance.

Background Art

An optical system including a front group having negative refractive power and a rear group having positive refractive power in that order from the object side has conventionally been well known as an imaging optical system used for imaging apparatuses, such as an in-vehicle camera, a monitoring camera, a video camera, and an electronic still camera.

In recent years, portable imaging apparatuses, such as a mobile phone and a digital camera, have been widely used. The recent reduction in the size of an imaging apparatus requires more reduction in the size of an imaging lens to be incorporated in an imaging apparatus. In addition, the pixel density of an image sensor to be incorporated in an imaging apparatus has been increased, and adapting to this increase requires higher resolution of an imaging lens to be incorporated in an imaging apparatus. Thus, a small-sized imaging lens satisfying such requirements has been devised.

Citation List

Patent Literature

     Patent Literature 1: JP 2003-232998A
     Patent Literature 2: JP 2006-209028A

Summary of Invention

Technical Problem

Accordingly, a further reduction in size is needed for a super-wide-angle lens to be incorporated in a small-sized digital device, such as a mobile phone or a sportscam.
A wide-angle lens with a conventional design, however, has a too long back focus to be used for a small-sized digital device, and its optical system size is far from a small size.
The present technology, which has been devised in view of such conventional circumstances, makes it possible to provide an imaging apparatus that has a small size and excellent optical performance.

Solution to Problem

An imaging lens according to a first aspect of the present technology includes: a front group that is placed on an object side and includes at least one lens having negative refractive power and at least one lens having positive refractive power; a rear group that is placed on an imaging surface side and includes at least one lens having negative refractive power; and a diaphragm placed between the front group and the rear group. A shape of a lens surface closest to an imaging surface is an aspheric shape with an inflection point. When a maximum value of an Abbe number of the lens having negative refractive power included in the front group is $\nu_{max}$ and a minimum value of an Abbe number of the lens having positive refractive power included in the front group is $\nu_{min}$, a relation of

$$\nu_{max} - \nu_{min} > 14$$

is satisfied.
When a distance on an optical axis from a surface vertex of a lens surface positioned closest to an object to the imaging surface is $\Sigma d$ and a focal length of a whole system of the imaging lens is f, a relation of

$$\Sigma d/f < 15$$

may be satisfied.

When a combined focal length of lenses that are positioned closer to the imaging surface than the diaphragm is is $f_s$ and a focal length of a whole system of the imaging lens is f, a relation of

$$0.5 < f_s/f < 5.0$$

may be satisfied.

A relation of

$$\nu_{max} - \nu_{min} > 14.4$$

may be satisfied.

A relation of

$$\Sigma d/f < 8.0$$

may be satisfied.

A lens placed closest to the imaging surface may be a lens having negative refractive power so that the relation is satisfied.

The lens surface closest to the imaging surface may have a concave shape in a vicinity of an optical axis and have a convex shape at a peripheral portion so that the relation is satisfied.

An angle of view of the imaging lens may be 100 degrees or more so that the relation is satisfied.

The imaging lens may include six or more lenses so that the relation is satisfied.

A lens having an aspheric shape with an inflection point may be formed of plastic so that the relation is satisfied.

A lens with a size equal to or smaller than a specific size may be formed of plastic so that the relation is satisfied.

A lens with a size equal to or larger than a specific size may be formed of glass so that the relation is satisfied.

A camera module according to a second aspect of the present technology or an imaging apparatus according to a third aspect of the present technology includes an imaging lens, the imaging lens including a front group that is placed on an object side and includes at least one lens having negative refractive power and at least one lens having positive refractive power, a rear group that is placed on an imaging surface side and includes at least one lens having negative refractive power, and a diaphragm placed between the front group and the rear group. A shape of a lens surface of the imaging lens closest to an imaging surface is an aspheric shape with an inflection point. When a maximum value of an Abbe number of the lens having negative refractive power included in the front group is $\nu_{max}$ and a minimum value of an Abbe number of the lens having positive refractive power included in the front group is $\nu_{min}$, a relation of

$$\nu_{max} - \nu_{min} > 14$$

is satisfied.

Advantageous Effects of Invention

According to the first to third aspects of the present technology, an imaging apparatus that has a small size and excellent optical performance can be provided.

Brief Description of Drawings

[FIG. 1] FIG. 1 is a view for describing an outline of the present technology.
[FIG. 2] FIG. 2 is a view illustrating an example configuration of a camera module.

[FIG. 3] FIG. 3 is a view showing a curvature radius, spacing, a refractive index, and an Abbe number of each surface.

[FIG. 4] FIG. 4 is a view showing a curvature radius, a conic constant, and aspheric coefficients of each surface.

[FIG. 5] FIG. 5 is a view showing aberration of an imaging lens.

[FIG. 6] FIG. 6 is a view illustrating an example configuration of a camera module.

[FIG. 7] FIG. 7 is a view showing a curvature radius, spacing, a refractive index, and an Abbe number of each surface.

[FIG. 8] FIG. 8 is a view showing a curvature radius, a conic constant, and aspheric coefficients of each surface.

[FIG. 9] FIG. 9 is a view showing aberration of an imaging lens.

[FIG. 10] FIG. 10 is a view illustrating an example configuration of a camera module.

[FIG. 11] FIG. 11 is a view showing a curvature radius, spacing, a refractive index, and an Abbe number of each surface.

[FIG. 12] FIG. 12 is a view showing a curvature radius, a conic constant, and aspheric coefficients of each surface.

[FIG. 13] FIG. 13 is a view showing aberration of an imaging lens.

[FIG. 14] FIG. 14 is a view illustrating an example configuration of a camera module.

[FIG. 15] FIG. 15 is a view showing a curvature radius, spacing, a refractive index, and an Abbe number of each surface.

[FIG. 16] FIG. 16 is a view showing a curvature radius, a conic constant, and aspheric coefficients of each surface.

[FIG. 17] FIG. 17 is a view showing aberration of an imaging lens.

[FIG. 18] FIG. 18 is a view illustrating an example configuration of a camera module.

[FIG. 19] FIG. 19 is a view showing a curvature radius, spacing, a refractive index, and an Abbe number of each surface.

[FIG. 20] FIG. 20 is a view showing a curvature radius, a conic constant, and aspheric coefficients of each surface.

[FIG. 21] FIG. 21 is a view showing aberration of an imaging lens.

[FIG. 22] FIG. 22 is a view illustrating an example configuration of a camera module.

[FIG. 23] FIG. 23 is a view showing a curvature radius, spacing, a refractive index, and an Abbe number of each surface.

[FIG. 24] FIG. 24 is a view showing a curvature radius, a conic constant, and aspheric coefficients of each surface.

[FIG. 25] FIG. 25 is a view showing aberration of an imaging lens.

[FIG. 26] FIG. 26 is a view illustrating an example configuration of an imaging apparatus.

Description of Embodiment(s)

Hereinafter, embodiments to which the present technology is applied will be described with reference to the drawings. Note that lens data and the like that are shown in the following description are examples, and the present technology is not necessarily limited to such examples; alterations may occur, as appropriate, insofar as they are within the scope of the present technology.

<Outline of the present technology>

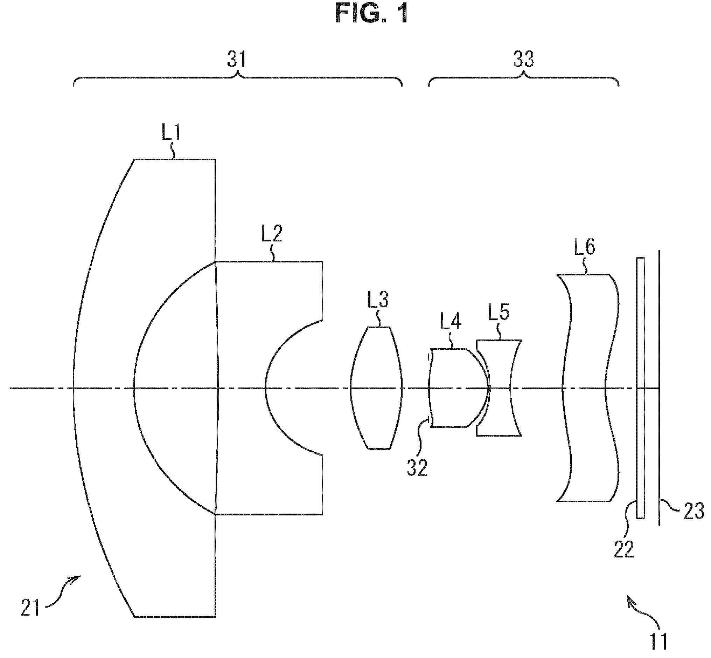

First, an outline of the present technology is described. A camera module to which the present technology is applied is, for example, configured as illustrated in FIG. 1. In the figure, the dash-dotted line represents an optical axis of the camera module.

A camera module 11 illustrated in FIG. 1 includes an imaging lens 21, an optical filter 22, and an image sensor 23.

The imaging lens 21 is, for example, a super-wide-angle lens whose angle of view is 100 degrees or more, and includes a front group 31, a diaphragm 32, and a rear group 33. In the imaging lens 21, the front group 31, the diaphragm 32, and the rear group 33 are placed in that order from the object side toward an imaging surface. In other words, the front group 31 is placed on the object side, the rear group 33 is placed on the imaging surface side, and the diaphragm 32 is placed between the front group 31 and the rear group 33.

The front group 31 includes at least one lens having negative refractive power and at least one lens having positive refractive power. In this example, the front group 31 includes lenses L1 to L3. The rear group 33 includes at least one lens having negative refractive power, and includes lenses L4 to L6 in this example.

The image sensor 23 is configured with, for example, a solid-state image sensor, such as a complementary metal oxide semiconductor (CMOS) or a charge coupled device (CCD), and is placed on an image forming surface (imaging surface) of the imaging lens 21. The image sensor 23 receives and photoelectrically converts light incident from a photographic subject via the imaging lens 21 and the optical filter 22, and outputs the resulting image data to a following stage.

To obtain a camera module including an imaging lens that has a small size and excellent optical performance, it is necessary to, for example, appropriately correct chromatic aberration of the imaging lens and shorten the back focus of the imaging lens.

In the camera module 11, the front group 31 includes at least one lens having negative refractive power and at least one lens having positive refractive power, the rear group 33 includes at least one lens having negative refractive power, and a lens surface closest to the imaging surface of the rear group 33 has an aspheric shape with an inflection point.

By thus configuring the front group 31 with at least one lens having negative refractive power and at least one lens having positive refractive power, it is possible to appropriately correct chromatic aberration to achieve excellent optical performance, and cause light to be refracted sharply to make the optical overall length short even when the angle of view is wide.

In particular, when $\nu_{max}$ denotes the maximum value of the Abbe number of the lens having negative refractive power included in the front group 31, $\nu_{min}$ denotes the minimum value of the Abbe number of the lens having positive refractive power included in the front group 31, and the following Expression (1) is satisfied, chromatic aberration of the imaging lens 21 can be reduced to an appropriate level.

[Math. 1]

$$\nu_{max} - \nu_{min} > 14 \qquad \cdots (1)$$

The larger the difference between the maximum value $\nu_{max}$ and the minimum value $\nu_{min}$ of Abbe numbers in Expression (1) is, the smaller the chromatic aberration can be; when the difference is a value greater than 14, the imaging lens 21 can have appropriate chromatic aberration.

It has been described that the relation of Expression (1) is preferably satisfied, but the relation of the following Expression (2) is further preferably satisfied.

[Math. 2]

$$\nu_{max} - \nu_{min} > 14.4 \qquad \cdots (2)$$

Furthermore, in the camera module 11, the rear group 33 includes at least one lens having negative refractive power, and a lens surface closest to the imaging surface of the rear group 33 has an aspheric shape with an inflection point; thus, part of the rear group 33 can have large negative power and the back focus of the imaging lens 21 can be shortened. In particular, using a lens having negative refractive power, that is, a lens whose optical power in the vicinity of its optical axis is negative, as the lens closest to the imaging surface included in the rear group 33 is suitable for further shortening the back focus of the imaging lens 21.

In the example of FIG. 1, the lenses L5 and L6 included in the rear group 33 are lenses having negative refractive power, and a lens surface on the image sensor 23 side, i.e., the imaging surface side, of the lens L6 has an aspheric shape with an inflection point near the lens edge. Specifically, the shape of the lens surface on the imaging surface side of the lens L6 at the lens center, i.e., in the vicinity of the optical axis, is a concave shape, and the shape of the lens surface at a peripheral portion, i.e., in the vicinity of an outer peripheral part, is a convex shape.

Furthermore, in the camera module 11, the following Expression (3) is satisfied so that the imaging lens 21 has a small size, that is, a low height.

[Math. 3]

$$\Sigma d/f < 15 \qquad \cdots (3)$$

In Expression (3), $\Sigma d$ represents the overall length of the imaging lens 21, i.e., the distance on the optical axis from the surface vertex of a lens surface positioned closest to an object of the imaging lens 21 to the imaging surface. Accordingly, in the example of FIG. 1, the distance in the optical axis direction from the lens surface on the left side in the figure of the lens L1, which is positioned closest to the object, to the image sensor 23 is the overall length $\Sigma d$ of the imaging lens 21. Furthermore, in Expression (3), f represents the focal length of the whole system of the imaging lens 21.

The smaller the ratio between the overall length $\Sigma d$ and the focal length f in Expression (3) is, the smaller the size of the imaging lens 21 is. In particular, when the value of the ratio between the overall length $\Sigma d$ and the focal length f is smaller than 15, the imaging lens 21 can have a sufficiently small size.

For example, when the focal length f is a fixed value, the smaller the value of the ratio between the overall length $\Sigma d$ and the focal length f is, the shorter the overall length $\Sigma d$ of the imaging lens 21 is. In addition, when the back focus of the imaging lens 21 is shortened, the overall length $\Sigma d$ is shortened accordingly.

In the present technology, the relation of the following Expression (4) is further preferably satisfied.

[Math. 4]

$$\Sigma\, d/f < 8.0 \qquad \cdots (4)$$

Furthermore, in the camera module 11, the following Expression (5) is satisfied so that the imaging lens 21 has a small size and keeps excellent optical performance.

[Math. 5]

$$0.5 < f_s/f < 5.0 \qquad \cdots (5)$$

In Expression (5), f represents the focal length of the whole system of the imaging lens 21, and $f_s$ represents a combined focal length of the lenses that are closer to the imaging surface than the diaphragm 32 is, i.e., the focal length of the rear group 33.

When the value of $f_s/f$ falls below the lower limit value of the condition of Expression (5), the eccentric error sensitivity of the group following the diaphragm 32 becomes very high and manufacturing difficulty is increased. On the other hand, when the value of $f_s/f$ exceeds the upper limit value of the condition of Expression (5), spherical aberration is excessively corrected and optical performance becomes difficult to keep.

To have a sufficiently short overall length and obtain sufficient optical performance, such as reduced chromatic aberration, the imaging lens 21 includes six or more lenses. For example, in the example of FIG. 1, the front group 31 includes three lenses and the rear group 33 includes three lenses, and the imaging lens 21 includes six lenses in total. This is because when the number of lenses included in the imaging lens 21 is five or less, it is difficult to obtain an imaging lens having an appropriate overall length and optical performance.

Furthermore, in terms of lens forming, an aspheric lens, particularly an aspheric lens having an aspheric shape with an inflection point, among the lenses included in the imaging lens 21 is preferably formed of a plastic material (lens material). It is also possible to use a lens formed of a plastic material as a lens with a size equal to or smaller than a specific size among the lenses included in the imaging lens 21, and use a lens formed of a glass material as a lens with a size larger than the specific size. This is because an aspheric lens or a relatively small lens is difficult to form using a lens material other than plastic.

If the above conditions are satisfied, even when the angle of view is 100 degrees or more, the imaging lens 21 can have a small size and sufficient optical performance.

In particular, in the imaging lens 21, the front group 31 and the rear group 33 positioned to precede and follow the diaphragm 32 are balanced in terms of chromatic aberration, and the lens surface closest to the imaging surface has an aspheric shape with an inflection point. Thus, back focus can be further shortened, and the imaging lens 21 can have a small size and excellent optical performance.

The camera module 11] including this imaging lens 21 can be applied to, for example, small-sized digital devices, such as a mobile phone, a wearable camera, and a monitoring camera.

<First embodiment>

<Example configuration of camera module>

Next, a specific embodiment to which the present technology is applied is described.

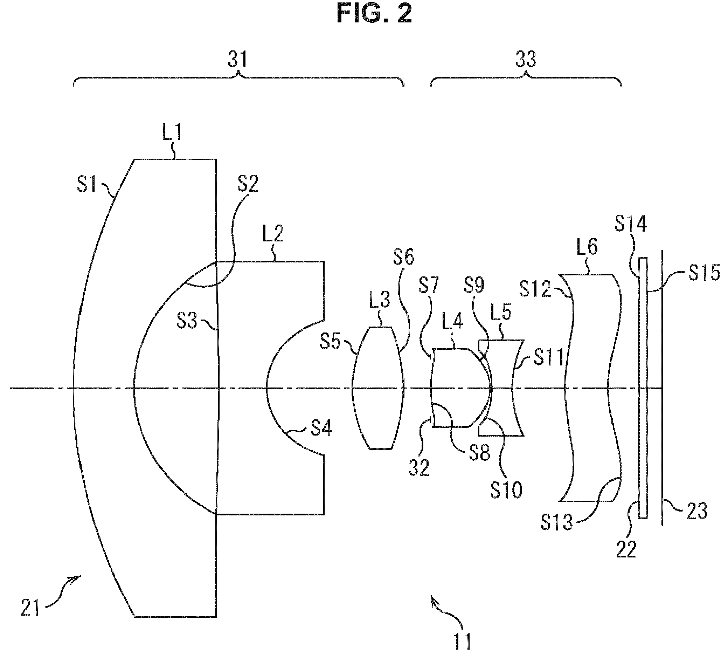

FIG. 2 is a view illustrating an example configuration of an embodiment of a camera module to which the present technology is applied. In FIG. 2, parts corresponding to those in FIG. 1 are given the same reference signs and description thereof is omitted as appropriate.

The camera module 11] illustrated in FIG. 2 has a configuration similar to that of the camera module 11] illustrated in FIG. 1.

In FIG. 2, a surface number is given to each surface of members, such as a lens, included in the camera module 11. Specifically, surface numbers S1 to S15 are given to lens surfaces of the lenses L1 to L3, a surface of the diaphragm 32, lens surfaces of the lenses L4 to L6, and front and rear surfaces of the optical filter 22 in that order from the object side toward the imaging surface.

The angle of view of the imaging lens 21 having such a configuration is 171 degrees. The overall length of the imaging lens 21, the focal length of the imaging lens 21, the focal length of the front group 31, the focal length of the rear group 33, and the focal lengths of the lenses L1 to L6 are listed in Table 1 below. Note that the unit of each value in Table 1 is millimeter.

[Table 1]

| Overall length | 8.3 |
|---|---|
| Focal length | 1.3569 |
| Front group focal length | 4.5866 |
| Rear group focal length | 4.1985 |
| Lens L1 focal length | -6.2894 |
| Lens L2 focal length | -2.5806 |
| Lens L3 focal length | 2.5008 |
| Lens L4 focal length | 1.4332 |
| Lens L5 focal length | -1.7252 |
| Lens L6 focal length | -30.3338 |

Here, the overall length of the imaging lens 21, which is the distance on the optical axis from the surface vertex of a lens surface positioned closest to the object of the imaging lens 21 to the imaging surface (the image sensor 23), is the overall length $\Sigma d$ in the above Expression (3). A lens whose focal length is a positive value is a lens having positive refractive power, and a lens whose focal length is a negative value is a lens having negative refractive power.

The focal length 1.3569 of the imaging lens 21 in Table 1 is the focal length f of the whole system of the imaging lens 21 in the above Expression (3) and Expression (5), and the rear group focal length 4.1985 in Table 1 is the focal length $f_s$ of the rear group 33 in the above Expression (5). In this example, it is shown that the front group 31 and the rear group 33 each function as a lens having positive refractive power.

Table 1 shows that the overall length of a conventional typical super-wide-angle lens is approximately 20 mm, whereas the overall length of the imaging lens 21 is as short as 8.3 mm.

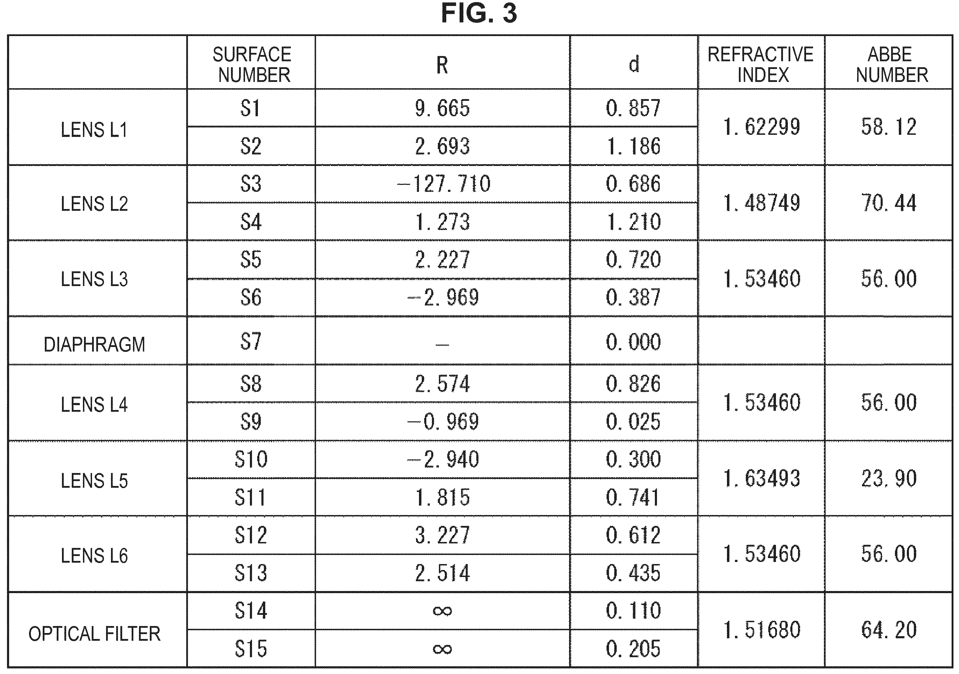

In addition, the curvature radiuses R of surfaces, such as lens surfaces, of the camera module 11, spacing d, which is the distances between adjacent surfaces, the refractive indices of lenses and the like, and the Abbe numbers of lenses and the like are listed in FIG. 3.

In FIG. 3, curvature radiuses R are listed in units of millimeters for the respective surfaces denoted by surface numbers S1 to S15 of the camera module 11] illustrated in FIG. 2.

The spacing d in FIG. 3 represents the distance on the optical axis between adjacent surfaces denoted by surface numbers. The unit of the spacing d is millimeter. Note that the spacing d for surface number S15 represents the distance on the optical axis from the surface with surface number

[0066]    S15 of the optical filter 22 to a light-receiving surface of the image sensor 23.

For example, the spacing d = 0.857 mm for surface number S1 represents the distance on the optical axis from the lens surface on the object side of the lens L1, which is denoted by surface number S1, to the lens surface on the imaging surface side of the lens L1, which is denoted by surface number S2, in other words, the thickness of the lens L1. The total value of the spacing d of each surface shown in FIG. 3 is the overall length $\Sigma d$ of the imaging lens 21.

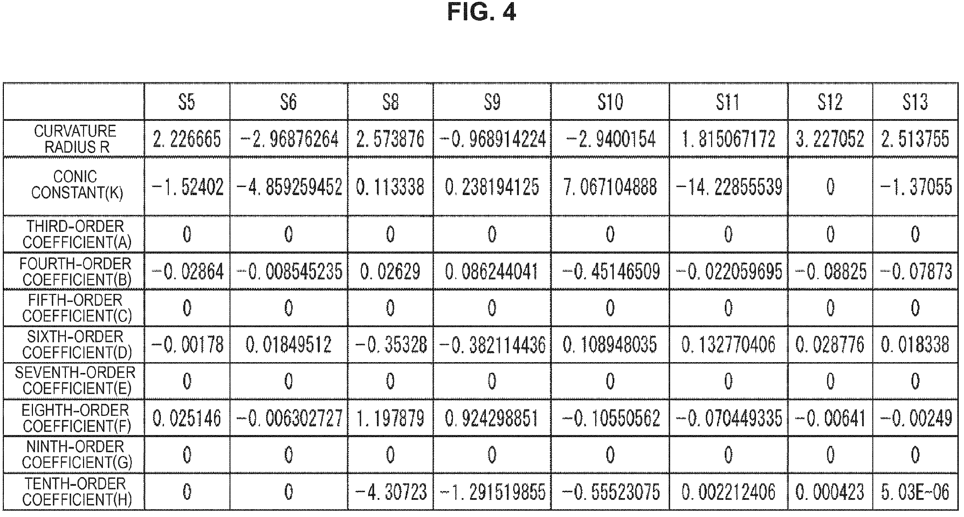

Furthermore, among the lenses included in the imaging lens 21 illustrated in FIG. 2, each lens surface of the lenses L3 to L6 has an aspheric shape, and the shapes of the lens surfaces can be expressed by an aspheric formula shown in the following Expression (6) using coefficients listed in FIG. 4.

[Math. 6]

$$Z = \frac{ch^2}{1 + \sqrt{1 - (1+k) c^2 h^2}} + Ah^3 + Bh^4 + Ch^5 + Dh^6 + Eh^7 + Fh^8 + Gh^9 + Hh^{10}$$

$$\cdots (6)$$

In Expression (6), Z represents the distance in the optical axis direction from the tangent plane to an aspheric surface vertex, i.e., the vertex of a lens surface, and h represents the height from the optical axis. In other words, the aspheric formula of Expression (6) expresses the distance Z between a lens surface at the height h from the optical axis and the tangent plane. Regarding the sign of the distance Z, the imaging surface side is the positive direction.

In addition, in Expression (6), c represents the inverse of the curvature radius R at an aspheric surface vertex, and K represents a conic constant. Furthermore, in Expression (6), A to H represent third-order to tenth-order aspheric coefficients, respectively.

In FIG. 4, the curvature radius R, the conic constant K, and the aspheric coefficients A to H, which are needed for the calculation of Expression (6), are listed for the surfaces with surface numbers S5, S6, and S8 to S13, which have aspheric shapes.

For example, the curvature radius R, the conic constant K, and the aspheric coefficients A to H of the lens surface denoted by surface number S5 are 2.226665, -1.52402, 0, -0.02864, 0, -0.00178, 0, 0.025146, 0, and 0, respectively.

The imaging lens 21 in FIG. 2 based on the above design data satisfies the conditions described in the outline of the present technology.

For example, the difference $\nu_{max} - \nu_{min}$ in Abbe number in Expression (1), the ratio $\Sigma d/f$ between the overall length and the focal length in Expression (3), and the ratio $f_s/f$ between focal lengths in Expression (5) are shown in Table 2 below.

[Table 2]

| $\nu_{max} - \nu_{min}$ | $\Sigma$ d/f | $f_s/f$ |
|---|---|---|
| 14.44 | 6.116884074 | 3.094185275 |

That is, Table 1 shows that the lenses L1 and L2 among the lenses included in the front group 31 are lenses having negative refractive power, and that the lens L3 among the lenses included in the front group 31 is a lens having positive refractive power.

In addition, FIG. 3 shows that the lens L2 has the maximum Abbe number among the lenses having negative refractive power included in the front group 31, and that the Abbe number is 70.44. FIG. 3 also shows that the Abbe number of the lens L3, which is a lens having positive refractive power included in the front group 31, is 56.00.

Accordingly, the difference between the maximum value $\nu_{max}$ and the minimum value $\nu_{min}$ of Abbe numbers is, as shown in Table 2, 14.44 (= 70.44 - 56.00) > 14, which satisfies Expression (1). It is also shown that the relation of Expression (2) is satisfied as well.

In addition, as shown in Table 1, the overall length $\Sigma d$ of the imaging lens 21 is 8.3 and the focal length f of the whole system of the imaging lens 21 is 1.3569; accordingly, the ratio between the overall length $\Sigma d$ and the focal length f is, as shown in Table 2, 6.116884074 (= 8.3/1.3569) < 15, which satisfies Expression (3). Furthermore, the relation of Expression (4) is satisfied.

Furthermore, as shown in Table 1, the focal length $f_s$ of the rear group 33 is 4.1985 and the focal length f of the whole system of the imaging lens 21 is 1.3569; accordingly, the ratio between the focal length $f_s$ and the focal length f is, as shown in Table 2, 3.094185275 (= 4.1985/1.3569), which satisfies Expression (5).

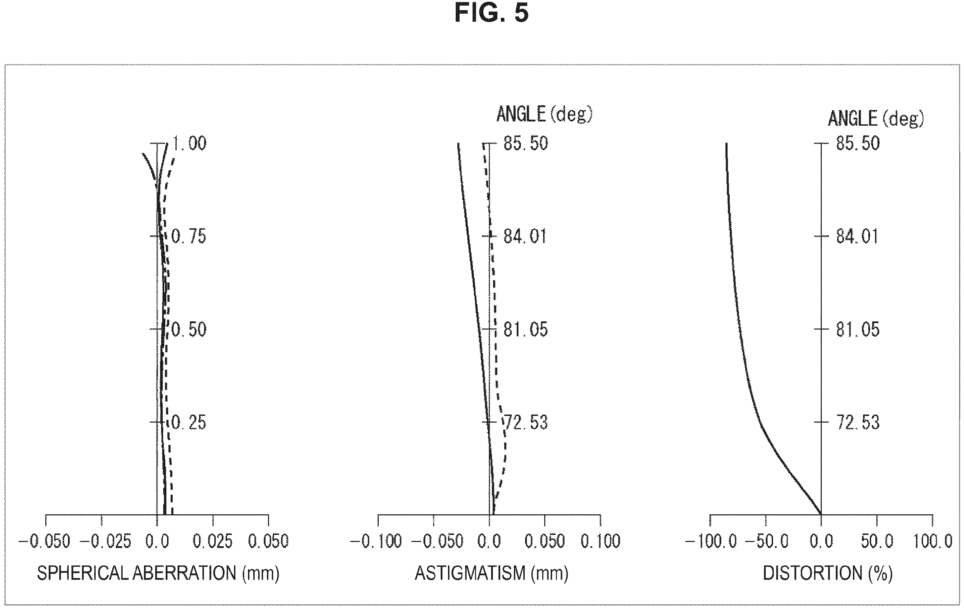

As described above, the imaging lens 21 in FIG. 2, which satisfies the conditions described in the outline of the present technology, has a small size and sufficient optical performance. FIG. 5 shows spherical aberration, astigmatism, and distortion of this imaging lens 21.

In FIG. 5, spherical aberration, astigmatism, and distortion are shown on the left side, at the center, and on the right side, respectively, in the figure.

Regarding the spherical aberration shown on the left side in the figure, the vertical axis represents the height from the optical axis, i.e., the incident height of light, and the horizontal axis represents the level of spherical aberration. In addition, regarding the spherical aberration shown on the left side in the figure, the dash-dotted-line, solid-line, and dotted-line curves represent spherical aberration for a g-line, a d-line, and a c-line, respectively. Here, the d-line is light with a wavelength serving as a reference wavelength, the g-line is light with a wavelength shorter than the reference wavelength, and the c-line is light with a wavelength longer than the reference wavelength. For example, the reference wavelength is 587.56 nm.

In this example, the interval in the lateral direction between the lines representing spherical aberration for the g-line, the d-line, and the c-line, i.e., a difference in spherical aberration, is small at each height from the optical axis, which shows that chromatic aberration of the imaging lens 21 is reduced to be small.

Regarding the astigmatism shown at the center in the figure, the vertical axis represents the angle of view, and the horizontal axis represents the level of astigmatism. Here, regarding the astigmatism shown at the center in the figure, the solid-line and dotted-line curves represent astigmatism for a sagittal ray and a meridional ray, respectively.

Furthermore, regarding the distortion shown on the right side in the figure, the vertical axis represents the angle of view, and the horizontal axis represents the level of distortion.

Thus, the spherical aberration, astigmatism, and distortion in FIG. 5 show that each aberration is excellently corrected in the imaging lens 21 and sufficient optical performance is obtained.

<Second embodiment>

<Example configuration of camera module>

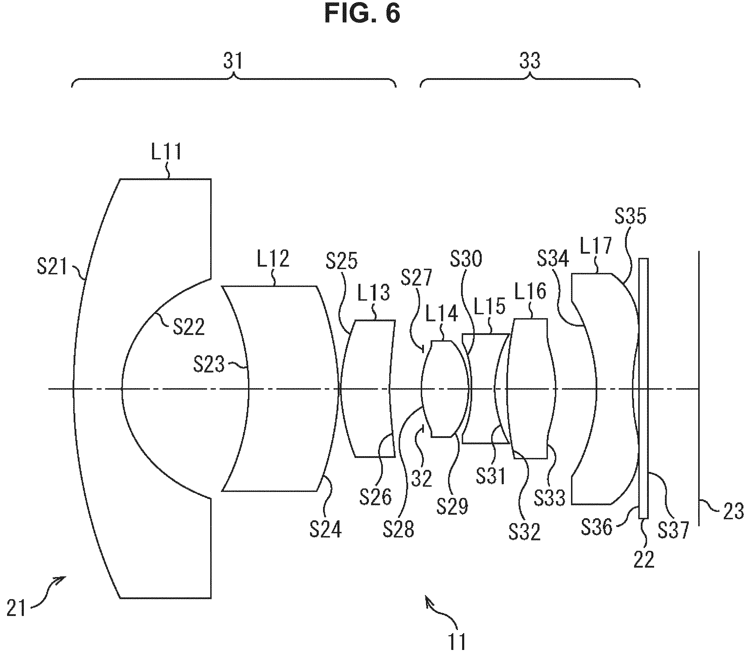

Next, another embodiment of a camera module to which the present technology is applied is described. FIG. 6 is a view illustrating another example configuration of a camera module. In FIG. 6, parts corresponding to those in FIG. 2 are given the same reference signs and description thereof is omitted as appropriate.

The camera module 11] illustrated in FIG. 6 includes the imaging lens 21, the optical filter 22, and the image sensor 23. The camera module 11] illustrated in FIG. 6 differs from the camera module 11 illustrated in FIG. 2 in the lens configuration of the front group 31 and the rear group 33 of the imaging lens 21, and has the same configuration as the camera module 11] of FIG. 2 in other respects.

In FIG. 6, the front group 31 includes lenses L11 to L13, and the lenses L11 to L13 are placed in that order from the object side toward an imaging surface. The rear group 33 includes lenses L14 to L17, and the lenses L14 to L17 are placed in that order from the object side toward the imaging surface. In addition, the diaphragm 32 is placed between the front group 31 and the rear group 33.

Thus, in the imaging lens 21 illustrated in FIG. 6, the rear group 33 includes four lenses, and the lens L17 closest to the imaging surface included in the rear group 33 is a lens having negative refractive power. A lens surface on the imaging surface side of the lens L17 has an aspheric shape with an inflection point near the lens edge. Specifically, the shape of the lens surface on the imaging surface side of the lens L17 in the vicinity of the optical axis is a concave shape, and the shape of the lens surface in the vicinity of an outer peripheral part is a convex shape.

In FIG. 6, a surface number is given to each surface of members, such as a lens, included in the camera module 11. Specifically, surface numbers S21 to S37 are given to lens surfaces of the lenses L11 to L13, a surface of the diaphragm 32, lens surfaces of the lenses L14 to L17, and front and rear surfaces of the optical filter 22 in that order from the object side toward the imaging surface.

The overall length of the imaging lens 21 having such a configuration, the focal length of the imaging lens 21, the focal length of the front group 31, the focal length of the rear group 33, and the focal lengths of the lenses L11 to L17 are listed in Table 3 below. Note that the unit of each value in Table 3 is millimeter. The notation method of Table 3 is similar to that of Table 1 and description thereof is omitted.

[Table 3]

| Overall length | 7.853 |
|---|---|
| Focal length | 1.5918 |
| Front group focal length | -8.119 |
| Rear group focal length | 2.3342 |
| Lens L11 focal length | -3.1527 |
| Lens L12 focal length | -61.5323 |
| Lens L13 focal length | 8.8789 |
| Lens L14 focal length | 1.4327 |
| Lens L15 focal length | -1.815 |
| Lens L16 focal length | 2.7424 |
| Lens L17 focal length | -2.6089 |

In this example, it is shown that the front group 31 functions as a lens having negative refractive power and the rear group 33 functions as a lens having positive refractive power.

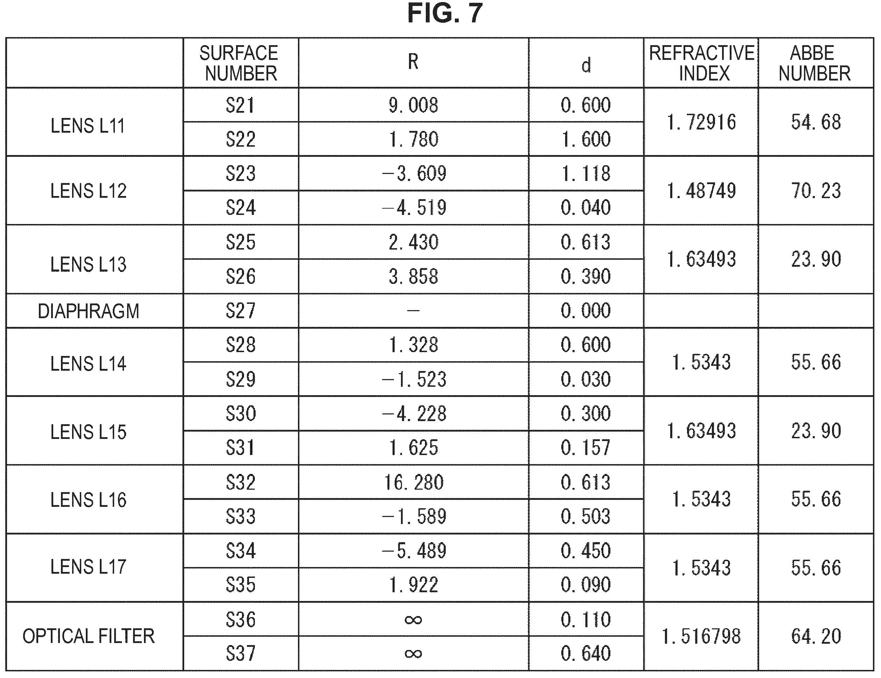

In addition, the curvature radiuses R of surfaces, such as lens surfaces, of the camera module 11 illustrated in FIG. 6, spacing d, which is the distances between adjacent surfaces, the refractive indices of lenses and the like, and the Abbe numbers of lenses and the like are listed in FIG. 7.

In FIG. 7, curvature radiuses R and spacing d are listed in units of millimeters for the respective surfaces denoted by surface numbers S21 to S37 of the camera module 11 illustrated in FIG. 6. In addition, the refractive indices and the Abbe numbers of each lens and the optical filter 22 are listed. The notation method of FIG. 7 is similar to that of FIG. 3 and description thereof is omitted.

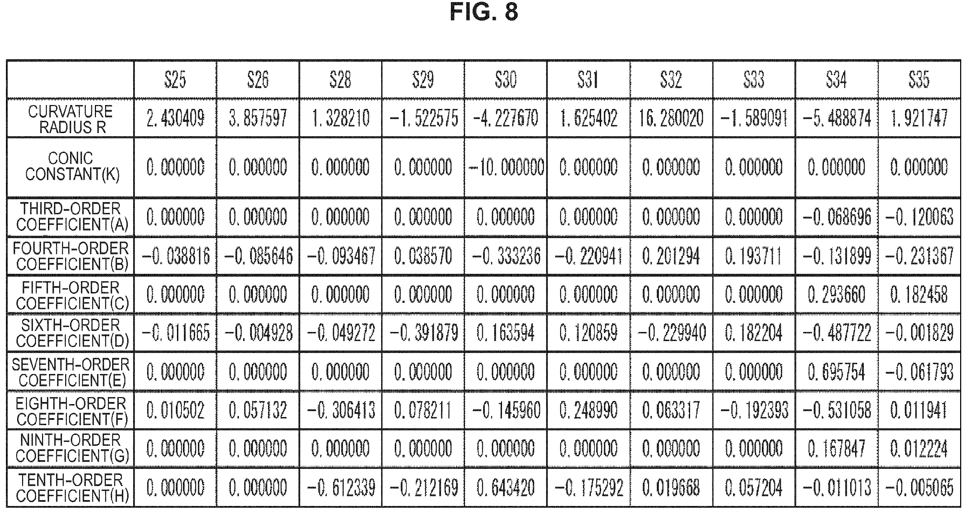

Furthermore, among the lenses included in the imaging lens 21 illustrated in FIG. 6, each lens surface of the lenses L13 to L17 has an aspheric shape, and the shapes of the lens surfaces can be expressed by an aspheric formula shown in the above Expression (6) using coefficients listed in FIG. 8.

In FIG. 7, the curvature radius R, the conic constant K, and the aspheric coefficients A to H, which are needed for the calculation of Expression (6), are listed for the surfaces with surface numbers S25, S26, and S28 to S35, which have aspheric shapes. The notation method of FIG. 8 is similar to that of FIG. 4 and description thereof is omitted.

The imaging lens 21 in FIG. 6 based on the above design data satisfies the conditions described in the outline of the present technology.

For example, the difference $\nu_{max}$ - $\nu_{min}$ in Abbe number in Expression (1), the ratio $\Sigma d/f$ between the overall length and the focal length in Expression (3), and the ratio $f_s/f$ between focal lengths in Expression (5) are shown in Table 4 below.

[Table 4]

| $\nu_{max}$-$\nu_{min}$ | $\Sigma$ d/f | $f_s/f$ |
|---|---|---|
| 46.33 | 4.93340872 | 1.46639025 |

That is, Table 3 shows that the lenses L11 and L12 among the lenses included in the front group 31 are lenses having negative refractive power, and that the lens L13 among the lenses included in the front group 31 is a lens having positive refractive power.

In addition, FIG. 7 shows that the lens L12 has the maximum Abbe number among the lenses having negative refractive power included in the front group 31, and that the Abbe number is 70.23. FIG. 7 also shows that the Abbe number of the lens L13, which is a lens having positive refractive power included in the front group 31, is 23.90.

Accordingly, the difference between the maximum value $\nu_{max}$ and the minimum value $\nu_{min}$ of Abbe numbers is, as shown in Table 4, 46.33 (= 70.23 - 23.90) > 14, which satisfies both the relation of Expression (1) and the relation of Expression (2).

In addition, as shown in Table 3, the overall length $\Sigma d$ of the imaging lens 21 is 7.853 and the focal length f of the whole system of the imaging lens 21 is 1.5918; accordingly, the ratio between the overall length $\Sigma d$ and the focal length f is, as shown in Table 4, 4.93340872 (= 7.853/1.5918) < 15, which satisfies both the relation of Expression (3) and the relation of Expression (4).

Furthermore, as shown in Table 3, the focal length $f_s$ of the rear group 33 is 2.3342 and the focal length f of the whole system of the imaging lens 21 is 1.5918; accordingly, the ratio between the focal length $f_s$ and the focal length f is, as shown in Table 4, 1.46639025 (= 2.3342/1.5918), which satisfies Expression (5).

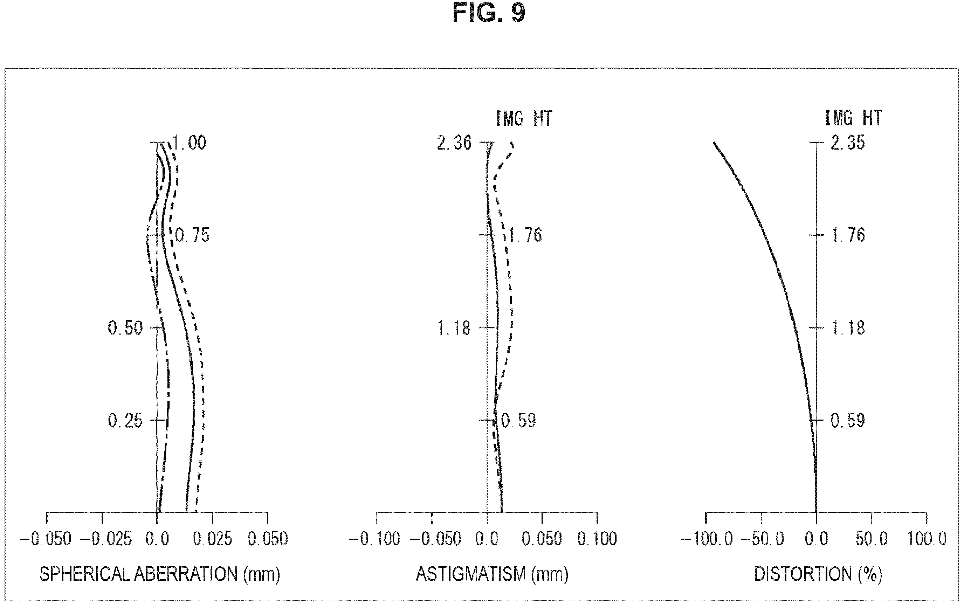

As described above, the imaging lens 21 in FIG. 6, which satisfies the conditions described in the outline of the present technology, has a small size and sufficient optical performance. FIG. 9 shows spherical aberration, astigmatism, and distortion of this imaging lens 21.

In FIG. 9, spherical aberration, astigmatism, and distortion are shown on the left side, at the center, and on the right side, respectively, in the figure. The notation method of FIG. 9 is similar to that of FIG. 5 and description thereof is omitted. Note that in FIG. 9, the vertical axis for the astigmatism and the distortion is the height of an image.

The spherical aberration, astigmatism, and distortion in FIG. 9 show that each aberration is excellently corrected in the imaging lens 21 and sufficient optical performance is obtained.

<Third embodiment>

<Example configuration of camera module>

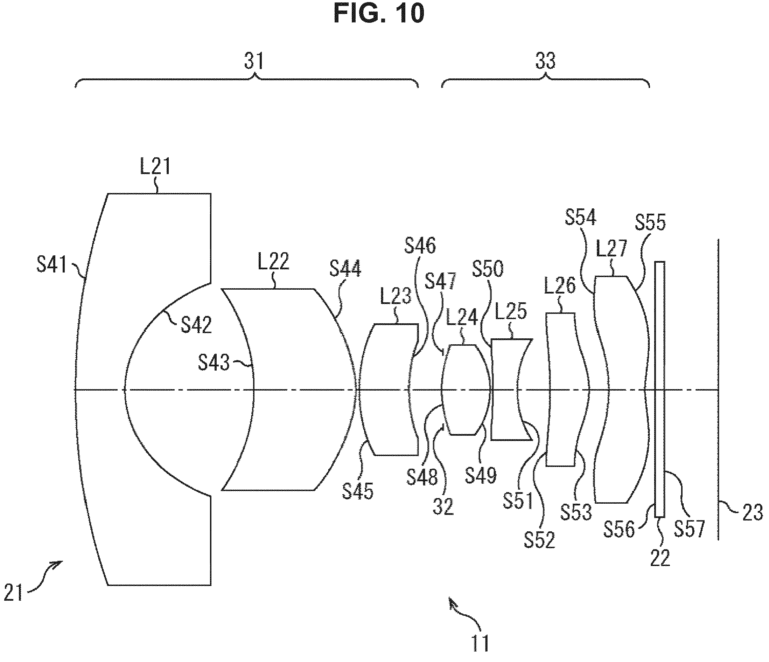

Next, further another embodiment of a camera module to which the present technology is applied is described. FIG. 10 is a view illustrating another example configuration of a camera module. In FIG. 10, parts corresponding to those in FIG. 2 are given the same reference signs and description thereof is omitted as appropriate.

The camera module 11 illustrated in FIG. 10 includes the imaging lens 21, the optical filter 22, and the image sensor 23. The camera module 11 illustrated in FIG. 10 differs from the camera module 11 illustrated in FIG. 2 in the lens configuration of the front group 31 and the rear group 33 of the imaging lens 21, and has the same configuration as the camera module 11 of FIG. 2 in other respects.

In FIG. 10, the front group 31 includes lenses L21 to L23, and the lenses L21 to L23 are placed in that order from the object side toward an imaging surface. The rear group 33 includes lenses L24 to L27, and the lenses L24 to L27 are placed in that order from the object side toward the imaging surface. In addition, the diaphragm 32 is placed between the front group 31 and the rear group 33.

Thus, in the imaging lens 21 illustrated in FIG. 10, the rear group 33 includes four lenses, and the lens L27 closest to the imaging surface included in the rear group 33 is a lens having negative refractive power. A lens surface on the imaging surface side of the lens L27 has an aspheric shape with an inflection point near the lens edge. Specifically, the shape of the lens surface on the imaging surface side of the lens L27 in the vicinity of the optical axis is a concave shape, and the shape of the lens surface in the vicinity of an outer peripheral part is a convex shape.

In FIG. 10, a surface number is given to each surface of members, such as a lens, included in the camera module 11. Specifically, surface numbers S41 to S57 are given to lens surfaces of the lenses L21 to L23, a surface of the diaphragm 32, lens surfaces of the lenses L24 to L27, and front and rear surfaces of the optical filter 22 in that order from the object side toward the imaging surface.

The overall length of the imaging lens 21 having such a configuration, the focal length of the imaging lens 21, the focal length of the front group 31, the focal length of the rear group 33, and the focal lengths of the lenses L21 to L27 are listed in Table 5 below. Note that the notation method of Table 5 is similar to that of Table 1 and description thereof is omitted.

[Table 5]

| | |
|---|---|
| Overall length | 7.8918 |
| Focal length | 1.5894 |
| Front group focal length | -25.1294 |
| Rear group focal length | 2.658 |
| Lens L21 focal length | -3.0498 |
| Lens L22 focal length | 7.143 |
| Lens L23 focal length | 132.8227 |
| Lens L24 focal length | 1.5959 |
| Lens L25 focal length | -2.5717 |
| Lens L26 focal length | 3.3595 |
| Lens L27 focal length | -2.6414 |

In this example, it is shown that the front group 31 functions as a lens having negative refractive power and the rear group 33 functions as a lens having positive refractive power.

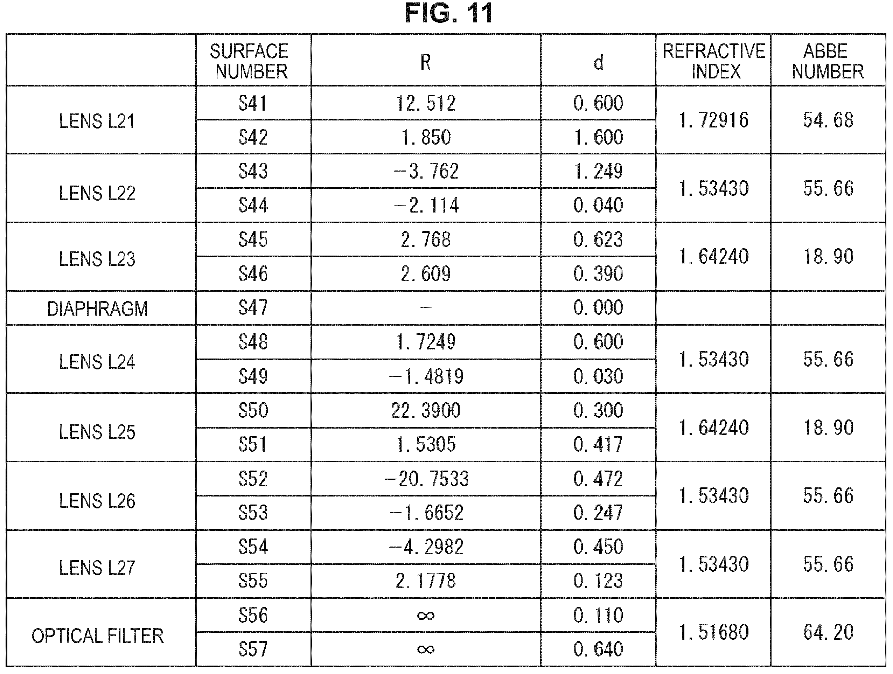

In addition, the curvature radiuses R of surfaces, such as lens surfaces, of the camera module 11 illustrated in FIG. 10, spacing d, which is the distances between adjacent surfaces, the refractive indices of lenses and the like, and the Abbe numbers of lenses and the like are listed in FIG. 11.

In FIG. 11, curvature radiuses R and spacing d are listed for the respective surfaces denoted by surface numbers S41 to S57 of the camera module 11 illustrated in FIG. 10. In addition, the refractive indices and the Abbe numbers of each lens and the optical filter 22 are listed. The notation method of FIG. 11] is similar to that of FIG. 3 and description thereof is omitted.

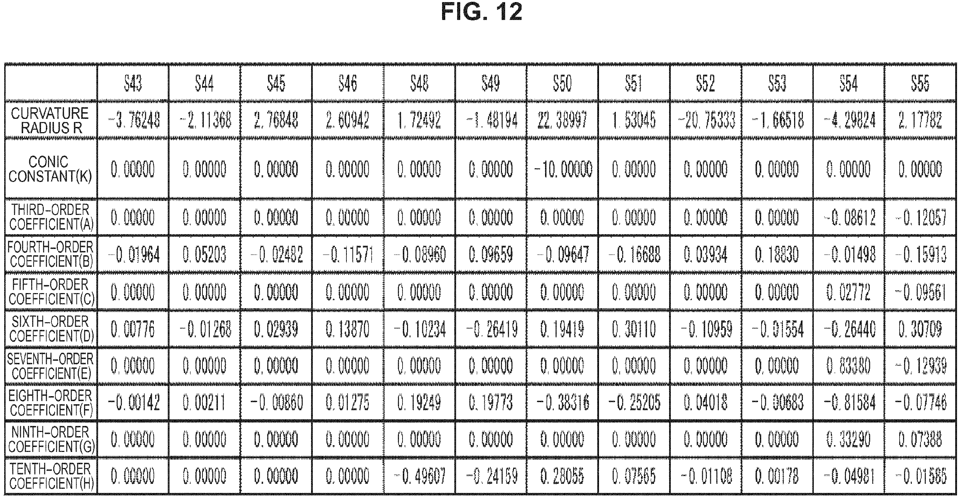

Furthermore, among the lenses included in the imaging lens 21 illustrated in FIG. 10, each lens surface of the lenses L22 to L27 has an aspheric shape, and the shapes of the lens surfaces can be expressed by an aspheric formula shown in the above Expression (6) using coefficients listed in FIG. 12.

In FIG. 12, the curvature radius R, the conic constant K, and the aspheric coefficients A to H, which are needed for the calculation of Expression (6), are listed for the surfaces with surface numbers S43 to S46 and S48 to S55, which have aspheric shapes. The notation method of FIG. 12 is similar to that of FIG. 4 and description thereof is omitted.

The imaging lens 21 in FIG. 10 based on the above design data satisfies the conditions described in the outline of the present technology.

For example, the difference $\nu_{max} - \nu_{min}$ in Abbe number in Expression (1), the ratio $\Sigma d/f$ between the overall length and the focal length in Expression (3), and the ratio $f_s/f$ between focal lengths in Expression (5) are shown in Table 6 below.

[Table 6]

| $\nu_{max} - \nu_{min}$ | $\Sigma d/f$ | $f_s/f$ |
|---|---|---|
| 36.76 | 4.965269913 | 1.672329181 |

That is, the difference between the maximum value $\nu_{max}$ and the minimum value $\nu_{min}$ of Abbe numbers is 36.76 > 14, the ratio between the overall length $\Sigma d$ and the focal length f is 4.965269913 < 15, and the ratio between the focal length $f_s$ and the focal length f is 1.672329181. This shows that the above Expression (1), Expression (3), and Expression (5) are satisfied. In addition, the relations of Expression (2) and Expression (4) are satisfied. Note that the calculation method of each value shown in Table 6 is similar to that of Table 2 and description thereof is omitted.

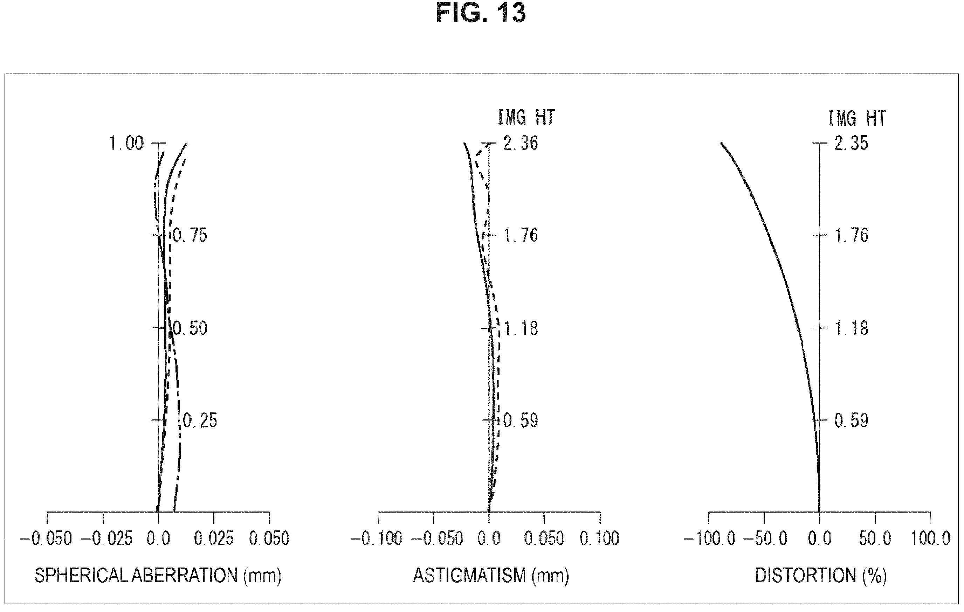

As described above, the imaging lens 21 in FIG. 10, which satisfies the conditions described in the outline of the present technology, has a small size and sufficient optical performance. FIG. 13 shows spherical aberration, astigmatism, and distortion of this imaging lens 21.

In FIG. 13, spherical aberration, astigmatism, and distortion are shown on the left side, at the center, and on the right side, respectively, in the figure. The notation method of FIG. 13 is similar to that of FIG. 9 and description thereof is omitted.

The spherical aberration, astigmatism, and distortion in FIG. 13 show that each aberration is excellently corrected in the imaging lens 21 and sufficient optical performance is obtained.

<Fourth embodiment>

<Example configuration of camera module>

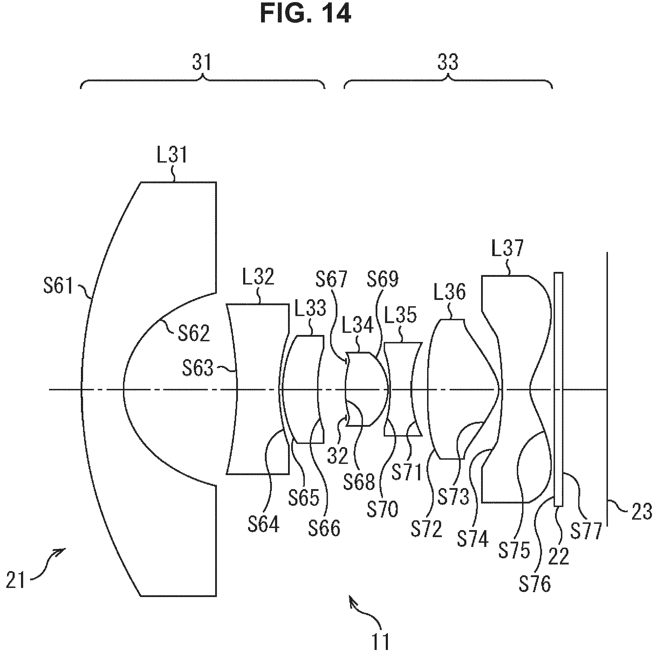

Next, further another embodiment of a camera module to which the present technology is applied is described. FIG. 14 is a view illustrating another example configuration of a camera module. In FIG. 14, parts corresponding to those in FIG. 2 are given the same reference signs and description thereof is omitted as appropriate.

The camera module 11 illustrated in FIG. 14 includes the imaging lens 21, the optical filter 22, and the image sensor 23. The camera module 11 illustrated in FIG. 14 differs from the camera module 11 illustrated in FIG. 2 in the lens configuration of the front group 31 and the rear group 33 of the imaging lens 21, and has the same configuration as the camera module 11 of FIG. 2 in other respects.

In FIG. 14, the front group 31 includes lenses L31 to L33, and the lenses L31 to L33 are placed in that order from the object side toward an imaging surface. The rear group 33 includes lenses L34 to L37, and the lenses L34 to L37 are placed in that order from the object side toward the imaging surface. In addition, the diaphragm 32 is placed between the front group 31 and the rear group 33.

Thus, in the imaging lens 21 illustrated in FIG. 14, the rear group 33 includes four lenses, and the lens L37 closest to the imaging surface included in the rear group 33 is a lens having negative refractive power. A lens surface on the imaging surface side of the lens L37 has an aspheric shape with an inflection point near the lens edge. Specifically, the shape of the lens surface on the imaging surface side of the lens L37 in the vicinity of the optical axis is a concave shape, and the shape of the lens surface in the vicinity of an outer peripheral part is a convex shape.

In FIG. 14, a surface number is given to each surface of members, such as a lens, included in the camera module 11. Specifically, surface numbers S61 to S77 are given to lens surfaces of the lenses L31 to L33, a surface of the diaphragm 32, lens surfaces of the lenses L34 to L37, and front and rear surfaces of the optical filter 22 in that order from the object side toward the imaging surface.

The overall length of the imaging lens 21 having such a configuration, the focal length of the imaging lens 21, the focal length of the front group 31, the focal length of the rear group 33, and the focal lengths of the lenses L31 to L37 are listed in Table 7 below. Note that the notation method of Table 7 is similar to that of Table 1 and description thereof is omitted.

[Table 7]

| | |
|---|---|
| Overall length | 7.44 |
| Focal length | 1.5326 |
| Front group focal length | -2.9555 |
| Rear group focal length | 1.6111 |
| Lens L31 focal length | -4.413 |
| Lens L32 focal length | -5.558 |
| Lens L33 focal length | 8.4356 |
| Lens L34 focal length | 1.4675 |
| Lens L35 focal length | -2.6436 |

(continued)

| | |
|---|---|
| Lens L36 focal length | 1.0955 |
| Lens L37 focal length | -1.0525 |

In this example, it is shown that the front group 31 functions as a lens having negative refractive power and the rear group 33 functions as a lens having positive refractive power.

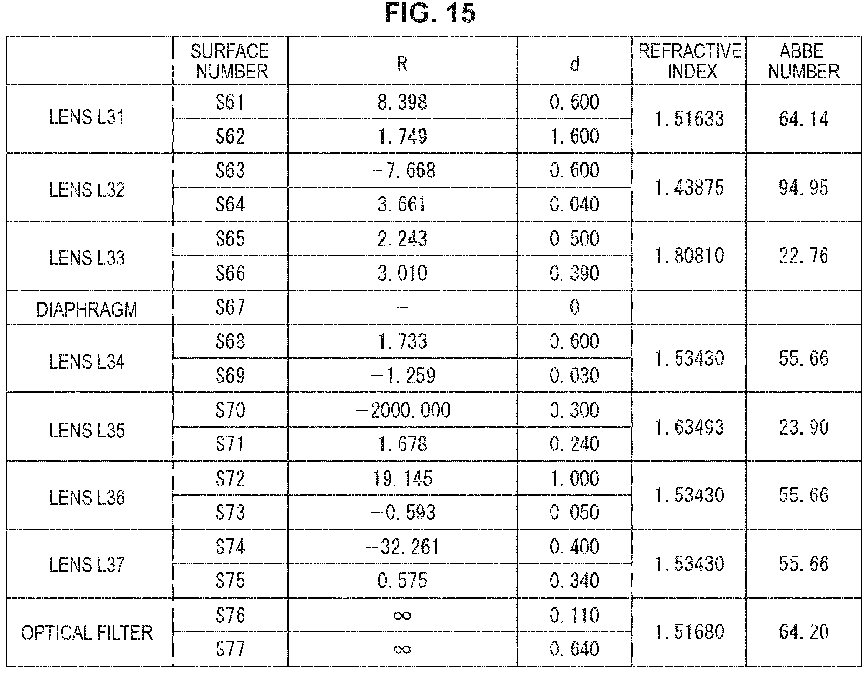

In addition, the curvature radiuses R of surfaces, such as lens surfaces, of the camera module 11 illustrated in FIG. 14, spacing d, which is the distances between adjacent surfaces, the refractive indices of lenses and the like, and the Abbe numbers of lenses and the like are listed in FIG. 15.

In FIG. 15, curvature radiuses R and spacing d are listed for the respective surfaces denoted by surface numbers S61 to S77 of the camera module 11 illustrated in FIG. 14. In addition, the refractive indices and the Abbe numbers of each lens and the optical filter 22 are listed. The notation method of FIG. 15 is similar to that of FIG. 3 and description thereof is omitted.

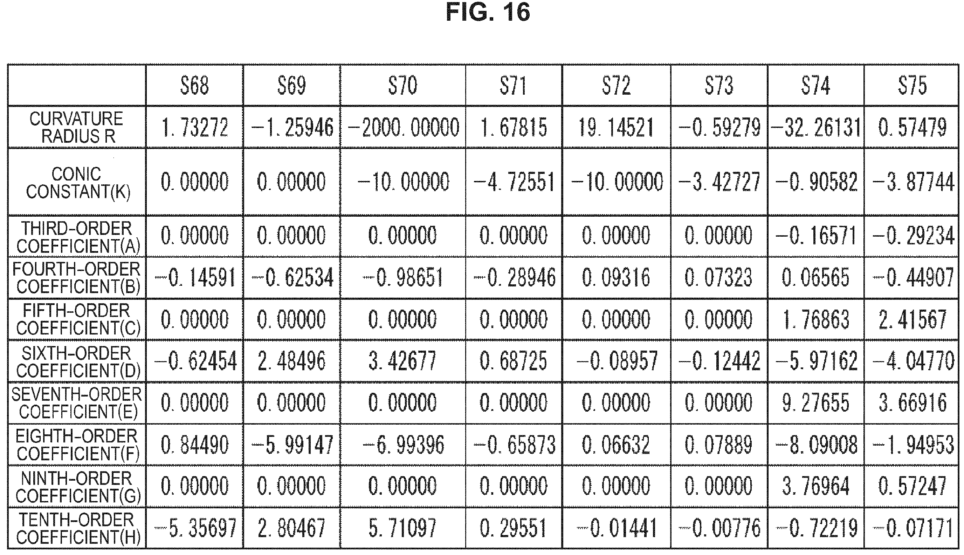

Furthermore, among the lenses included in the imaging lens 21 illustrated in FIG. 14, each lens surface of the lenses L34 to L37 has an aspheric shape, and the shapes of the lens surfaces can be expressed by an aspheric formula shown in the above Expression (6) using coefficients listed in FIG. 16.

In FIG. 16, the curvature radius R, the conic constant K, and the aspheric coefficients A to H, which are needed for the calculation of Expression (6), are listed for the surfaces with surface numbers S68 to S75, which have aspheric shapes. The notation method of FIG. 16 is similar to that of FIG. 4 and description thereof is omitted.

The imaging lens 21 in FIG. 14 based on the above design data satisfies the conditions described in the outline of the present technology.

For example, the difference $\nu_{max} - \nu_{min}$ in Abbe number in Expression (1), the ratio $\Sigma d/f$ between the overall length and the focal length in Expression (3), and the ratio $f_s/f$ between focal lengths in Expression (5) are shown in Table 8 below.

[Table 8]

| $\nu_{max} - \nu_{min}$ | $\Sigma\ d/f$ | $f_s/f$ |
|---|---|---|
| 72. 19 | 4.854495628 | 1.051220149 |

That is, the difference between the maximum value $\nu_{max}$ and the minimum value $\nu_{min}$ of Abbe numbers is 72.19 > 14, the ratio between the overall length $\Sigma d$ and the focal length f is 4.854495628 < 15, and the ratio between the focal length $f_s$ and the focal length f is 1.051220149. This shows that the above Expression (1), Expression (3), and Expression (5) are satisfied. In addition, the relations of Expression (2) and Expression (4) are satisfied. Note that the calculation method of each value shown in Table 8 is similar to that of Table 2 and description thereof is omitted.

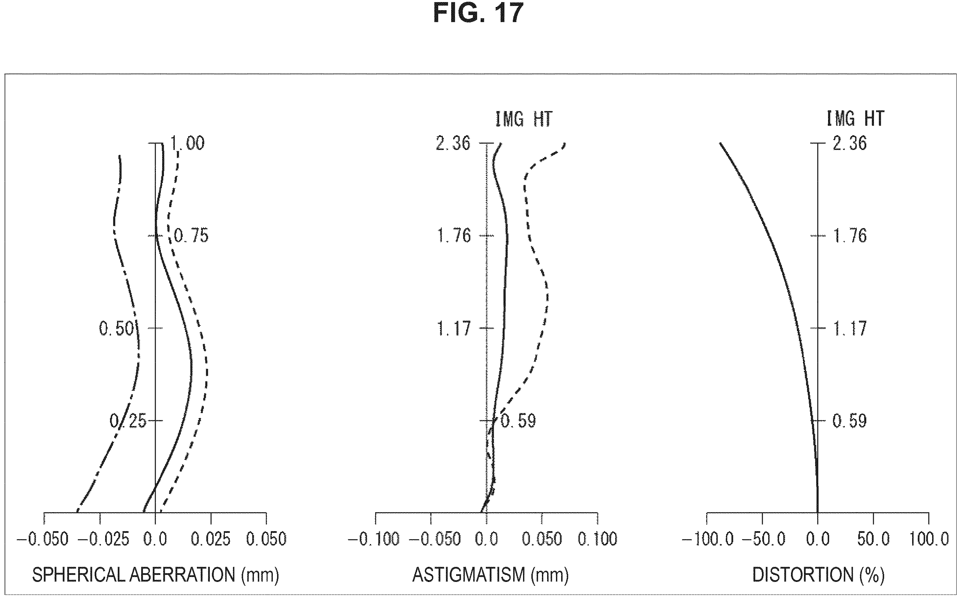

As described above, the imaging lens 21 in FIG. 14, which satisfies the conditions described in the outline of the present technology, has a small size and sufficient optical performance. FIG. 17 shows spherical aberration, astigmatism, and distortion of this imaging lens 21.

In FIG. 17, spherical aberration, astigmatism, and distortion are shown on the left side, at the center, and on the right side, respectively, in the figure. The notation method of FIG. 17 is similar to that of FIG. 9 and description thereof is omitted.

The spherical aberration, astigmatism, and distortion in FIG. 17 show that each aberration is excellently corrected in the imaging lens 21 and sufficient optical performance is obtained.

<Fifth embodiment>

<Example configuration of camera module>

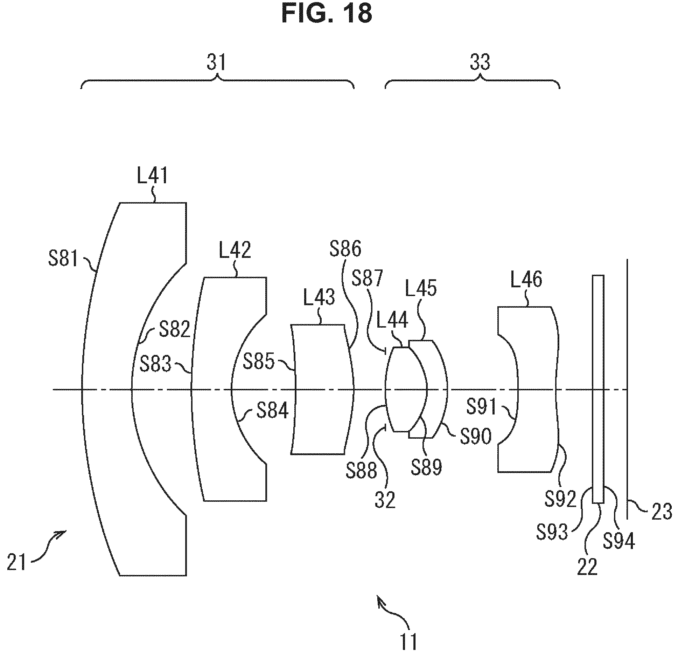

Next, further another embodiment of a camera module to which the present technology is applied is described. FIG. 18 is a view illustrating another example configuration of a camera module. In FIG. 18, parts corresponding to those in FIG. 2 are given the same reference signs and description thereof is omitted as appropriate.

The camera module 11 illustrated in FIG. 18 includes the imaging lens 21, the optical filter 22, and the image sensor 23. The camera module 11 illustrated in FIG. 18 differs from the camera module 11 illustrated in FIG. 2 in the lens configuration of the front group 31 and the rear group 33 of the imaging lens 21, and has the same configuration as the camera module 11 of FIG. 2 in other respects.

In FIG. 18, the front group 31 includes lenses L41 to L43, and the lenses L41 to L43 are placed in that order from the object side toward an imaging surface. The rear group 33 includes lenses L44 to L46, and the lenses L44 to L46 are placed in that order from the object side toward the imaging surface. In addition, the diaphragm 32 is placed between the front group 31 and the rear group 33.

In the imaging lens 21 illustrated in FIG. 18, the lens L46 closest to the imaging surface included in the rear group 33 is a lens having negative refractive power. A lens surface on the imaging surface side of the lens L46 has an aspheric shape with an inflection point near the lens edge. Specifically, the shape of the lens surface on the imaging surface side of the lens L46 in the vicinity of the optical axis is a concave shape, and the shape of the lens surface in the vicinity of an outer peripheral part is a convex shape.

In FIG. 18, a surface number is given to each surface of members, such as a lens, included in the camera module 11. Specifically, surface numbers S81 to S94 are given to lens surfaces of the lenses L41 to L43, a surface of the diaphragm 32, lens surfaces of the lenses L44 to L46, and front and rear surfaces of the optical filter 22 in that order from the object side toward the imaging surface. Note that the same surface number S89 is given to the lens surface on the imaging surface side of the lens L44 and the lens surface on the object side of the lens L45, which are in close contact with each other.

The overall length of the imaging lens 21 having such a configuration, the focal length of the imaging lens 21, the focal length of the front group 31, the focal length of the rear group 33, and the focal lengths of the lenses L41 to L46 are listed in Table 9 below. Note that the notation method of Table 9 is similar to that of Table 1 and description thereof is omitted.

[Table 9]

| Overall length | 9.4286 |
|---|---|
| Focal length | 1.8857 |
| Front group focal length | -9.7497 |
| Rear group focal length | 2.8203 |
| Lens L41 focal length | -8.014 |
| Lens L42 focal length | -4.6744 |
| Lens L43 focal length | 6.7042 |
| Lens L44 focal length | 4.2936 |
| Lens L45 focal length | -5.9721 |
| Lens L46 focal length | -4.1546 |

In this example, it is shown that the front group 31 functions as a lens having negative refractive power and the rear group 33 functions as a lens having positive refractive power.

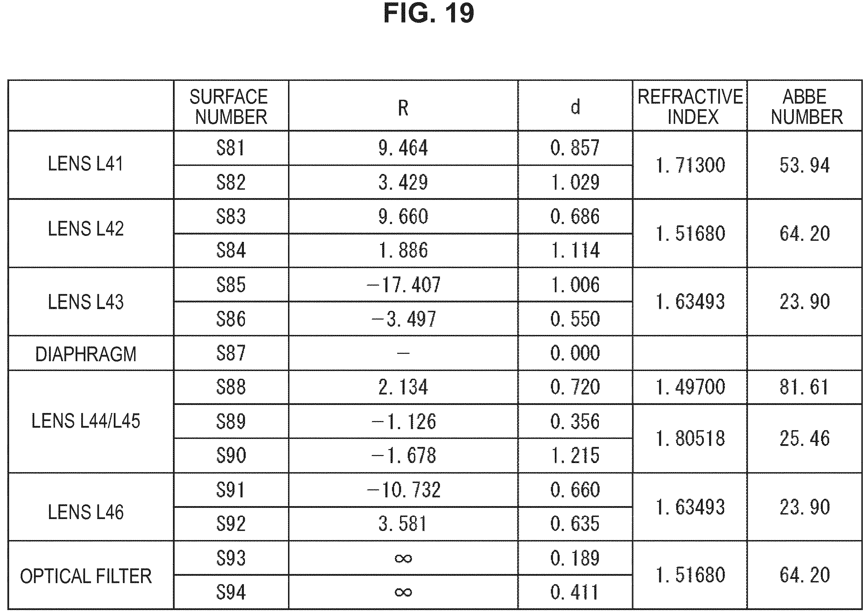

In addition, the curvature radiuses R of surfaces, such as lens surfaces, of the camera module 11 illustrated in FIG. 18, spacing d, which is the distances between adjacent surfaces, the refractive indices of lenses and the like, and the Abbe numbers of lenses and the like are listed in FIG. 19.

In FIG. 19, curvature radiuses R and spacing d are listed for the respective surfaces denoted by surface numbers S81 to S94 of the camera module 11 illustrated in FIG. 18. In addition, the refractive indices and the Abbe numbers of each lens and the optical filter 22 are listed. The notation method of FIG. 19 is similar to that of FIG. 3 and description thereof is omitted.

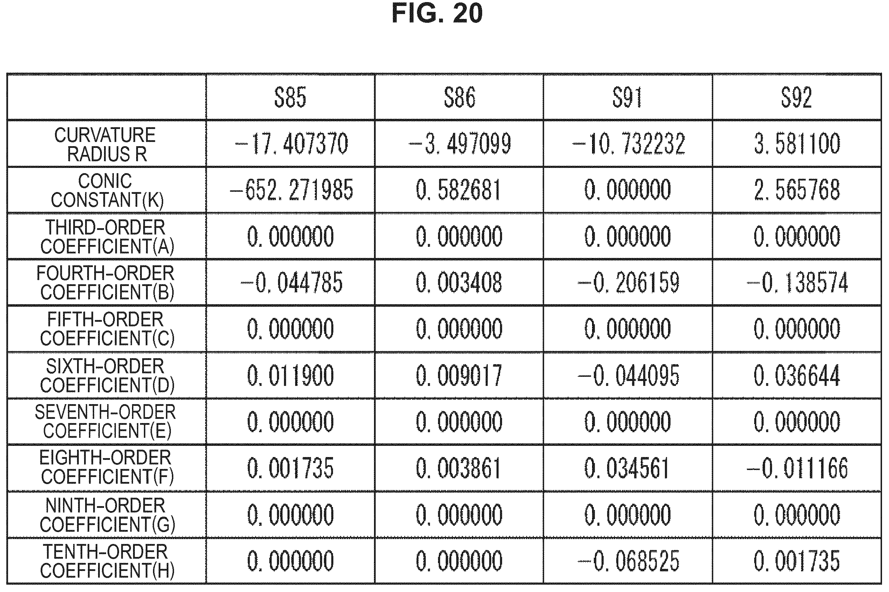

Furthermore, among the lenses included in the imaging lens 21 illustrated in FIG. 18, each lens surface of the lenses L43 and L46 has an aspheric shape, and the shapes of the lens surfaces can be expressed by an aspheric formula shown in the above Expression (6) using coefficients listed in FIG. 20.

In FIG. 20, the curvature radius R, the conic constant K, and the aspheric coefficients A to H, which are needed for the calculation of Expression (6), are listed for the surfaces with surface numbers S85, S86, S91, and S92, which have aspheric shapes. The notation method of FIG. 20 is similar to that of FIG. 4 and description thereof is omitted.

The imaging lens 21 in FIG. 18 based on the above design data satisfies the conditions described in the outline of the present technology.

For example, the difference $\nu_{max} - \nu_{min}$ in Abbe number in Expression (1), the ratio $\Sigma d/f$ between the overall length and the focal length in Expression (3), and the ratio $f_s/f$ between focal lengths in Expression (5) are shown in Table 10 below.

[Table 10]

| $\nu_{max} - \nu_{min}$ | $\Sigma$ d/f | $f_s$/f |
|---|---|---|
| 40.298 | 5.000053031 | 1.495624967 |

That is, the difference between the maximum value $\nu_{max}$ and the minimum value $\nu_{min}$ of Abbe numbers is 40.298 > 14, the ratio between the overall length $\Sigma$d and the focal length f is 5.000053031 <15, and the ratio between the focal length $f_s$ and the focal length f is 1.495624967. This shows that the above Expression (1), Expression (3), and Expression (5) are satisfied. In addition, the relations of Expression (2) and Expression (4) are satisfied. Note that the calculation method of each value shown in Table 10 is similar to that of Table 2 and description thereof is omitted.

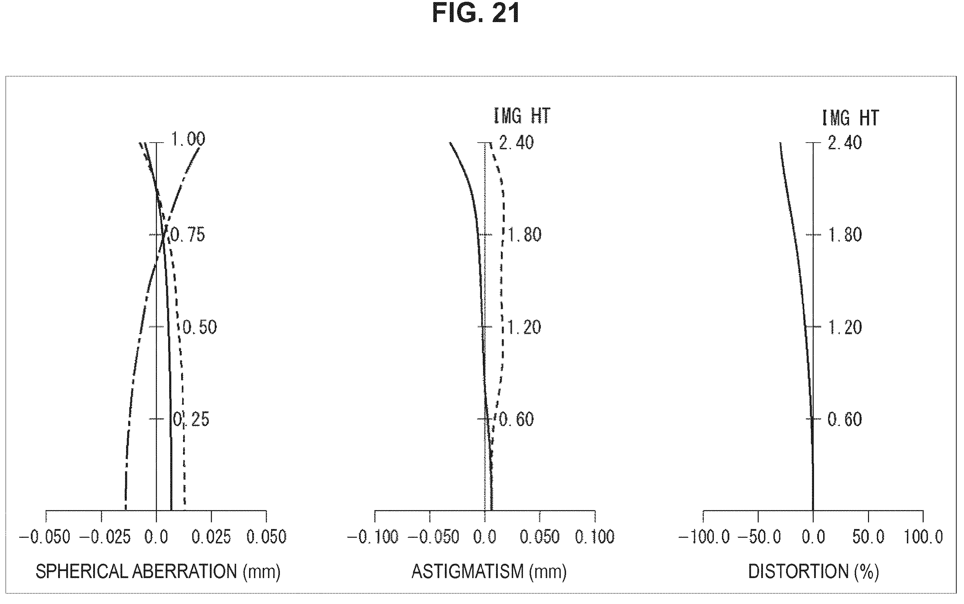

As described above, the imaging lens 21 in FIG. 18, which satisfies the conditions described in the outline of the present technology, has a small size and sufficient optical performance. FIG. 21 shows spherical aberration, astigmatism, and distortion of this imaging lens 21.

In FIG. 21, spherical aberration, astigmatism, and distortion are shown on the left side, at the center, and on the right side, respectively, in the figure. The notation method of FIG. 21 is similar to that of FIG. 9 and description thereof is omitted.

The spherical aberration, astigmatism, and distortion in FIG. 21 show that each aberration is excellently corrected in the imaging lens 21 and sufficient optical performance is obtained.

<Sixth embodiment>

<Example configuration of camera module>

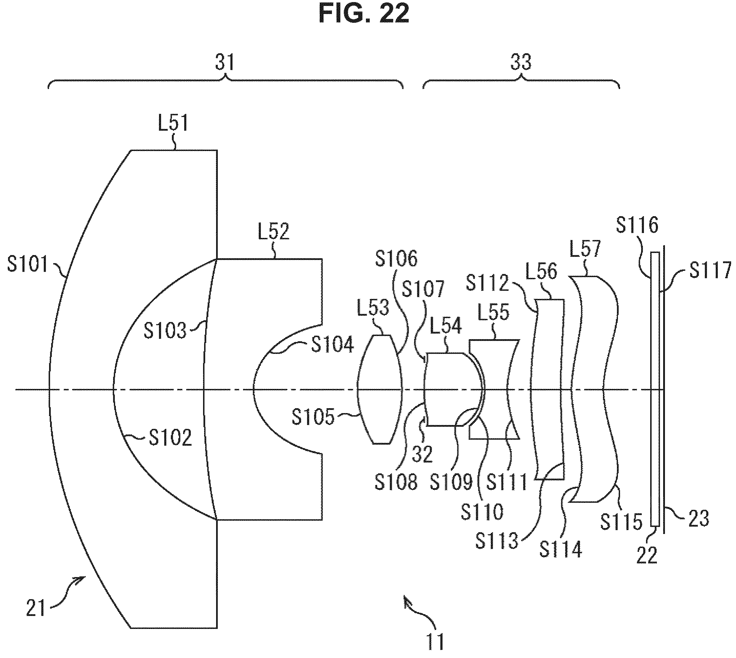

Next, further another embodiment of a camera module to which the present technology is applied is described. FIG. 22 is a view illustrating another example configuration of a camera module. In FIG. 22, parts corresponding to those in FIG. 2 are given the same reference signs and description thereof is omitted as appropriate.

The camera module 11 illustrated in FIG. 22 includes the imaging lens 21, the optical filter 22, and the image sensor 23. The camera module 11 illustrated in FIG. 22 differs from the camera module 11 illustrated in FIG. 2 in the lens configuration of the front group 31 and the rear group 33 of the imaging lens 21, and has the same configuration as the camera module 11 of FIG. 2 in other respects.

In FIG. 22, the front group 31 includes lenses L51 to L53, and the lenses L51 to L53 are placed in that order from the object side toward an imaging surface. The rear group 33 includes lenses L54 to L57, and the lenses L54 to L57 are placed in that order from the object side toward the imaging surface. In addition, the diaphragm 32 is placed between the front group 31 and the rear group 33.

Thus, in the imaging lens 21 illustrated in FIG. 22, the rear group 33 includes four lenses, and the lens L57 closest to the imaging surface included in the rear group 33 is a lens having negative refractive power. A lens surface on the imaging surface side of the lens L57 has an aspheric shape with an inflection point near the lens edge. Specifically, the shape of the lens surface on the imaging surface side of the lens L57 in the vicinity of the optical axis is a concave shape, and the shape of the lens surface in the vicinity of an outer peripheral part is a convex shape.

In FIG. 22, a surface number is given to each surface of members, such as a lens, included in the camera module 11. Specifically, surface numbers S101 to S117 are given to lens surfaces of the lenses L51 to L53, a surface of the diaphragm 32, lens surfaces of the lenses L54 to L57, and front and rear surfaces of the optical filter 22 in that order from the object side toward the imaging surface.

The angle of view of the imaging lens 21 having such a configuration is 171 degrees. The overall length of the imaging lens 21, the focal length of the imaging lens 21, the focal length of the front group 31, the focal length of the rear group 33, and the focal lengths of the lenses L51 to L57 are listed in Table 11 below. The notation method of Table 11 is similar to that of Table 1 and description thereof is omitted.

[Table 11]

| | |
|---|---|
| Overall length | 8.2 |
| Focal length | 1.3068 |
| Front group focal length | 3.0935 |
| Rear group focal length | 5.1111 |
| Lens L51 focal length | -6.5183 |

(continued)

| | |
|---|---|
| Lens L52 focal length | -2.7065 |
| Lens L53 focal length | 2.2953 |
| Lens L54 focal length | 1.4586 |
| Lens L55 focal length | -1.5999 |
| Lens L56 focal length | 43.4465 |
| Lens L57 focal length | -41.106 |

In this example, it is shown that the front group 31 and the rear group 33 each function as a lens having positive refractive power.

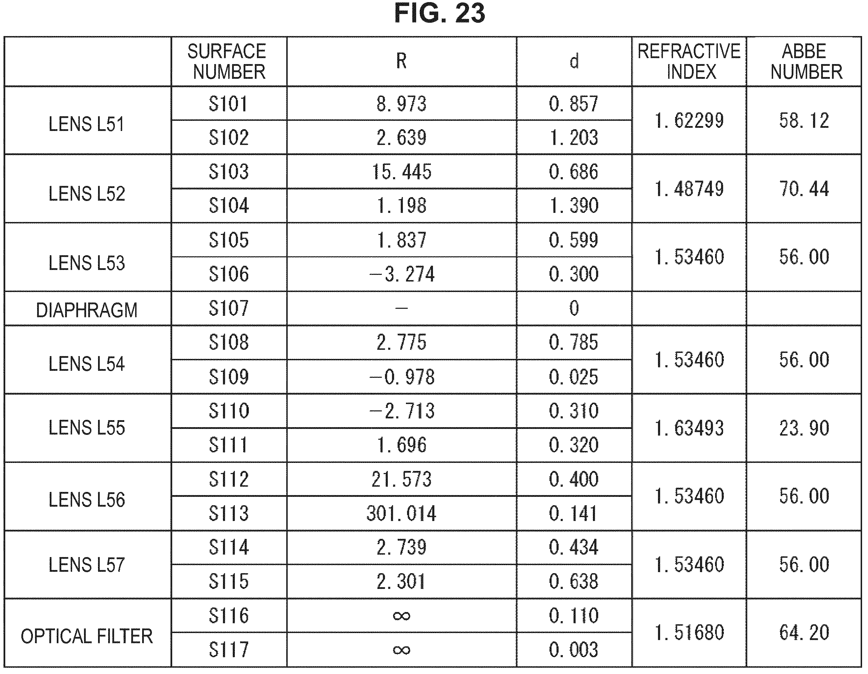

In addition, the curvature radiuses R of surfaces, such as lens surfaces, of the camera module 11 illustrated in FIG. 22, spacing d, which is the distances between adjacent surfaces, the refractive indices of lenses and the like, and the Abbe numbers of lenses and the like are listed in FIG. 23.

In FIG. 23, curvature radiuses R and spacing d are listed for the respective surfaces denoted by surface numbers S101 to S117 of the camera module 11 illustrated in FIG. 22. In addition, the refractive indices and the Abbe numbers of each lens and the optical filter 22 are listed. The notation method of FIG. 23 is similar to that of FIG. 3 and description thereof is omitted.

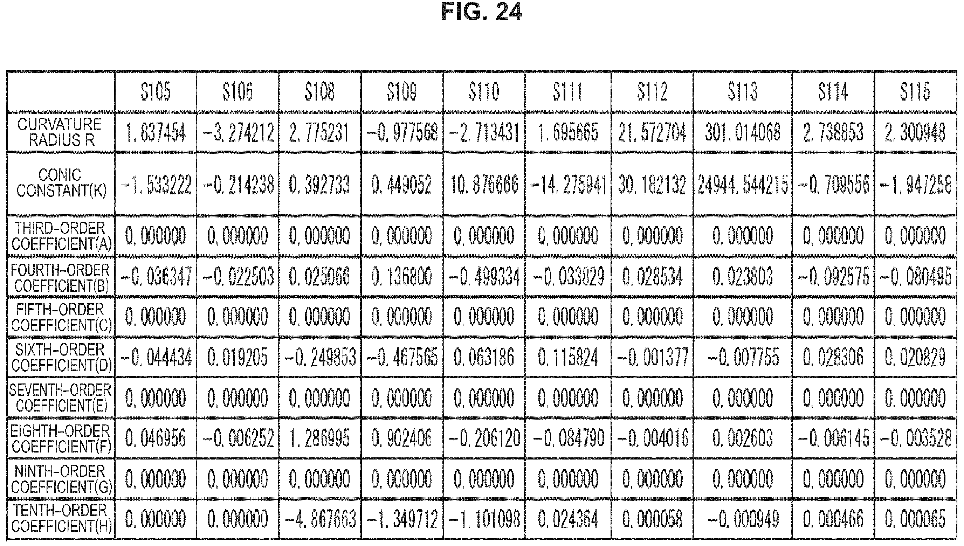

Furthermore, among the lenses included in the imaging lens 21 illustrated in FIG. 22, each lens surface of the lenses L53 to L57 has an aspheric shape, and the shapes of the lens surfaces can be expressed by an aspheric formula shown in the above Expression (6) using coefficients listed in FIG. 24.

In FIG. 24, the curvature radius R, the conic constant K, and the aspheric coefficients A to H, which are needed for the calculation of Expression (6), are listed for the surfaces with surface numbers S105, S106, and S108 to S115, which have aspheric shapes. The notation method of FIG. 24 is similar to that of FIG. 4 and description thereof is omitted.

The imaging lens 21 in FIG. 22 based on the above design data satisfies the conditions described in the outline of the present technology.

For example, the difference $\nu_{max} - \nu_{min}$ in Abbe number in Expression (1), the ratio $\Sigma d/f$ between the overall length and the focal length in Expression (3), and the ratio $f_s/f$ between focal lengths in Expression (5) are shown in Table 12 below.

[Table 12]

| $\nu_{max} - \nu_{min}$ | $\Sigma\, d/f$ | $f_s/f$ |
|---|---|---|
| 14. 44 | 6.274869911 | 3.911157025 |

That is, the difference between the maximum value $\nu_{max}$ and the minimum value $\nu_{min}$ of Abbe numbers is 14.44 > 14, the ratio between the overall length $\Sigma d$ and the focal length f is 6.274869911 < 15, and the ratio between the focal length $f_s$ and the focal length f is 3.911157025. This shows that the above Expression (1), Expression (3), and Expression (5) are satisfied. In addition, the relations of Expression (2) and Expression (4) are satisfied. Note that the calculation method of each value shown in Table 12 is similar to that of Table 2 and description thereof is omitted.

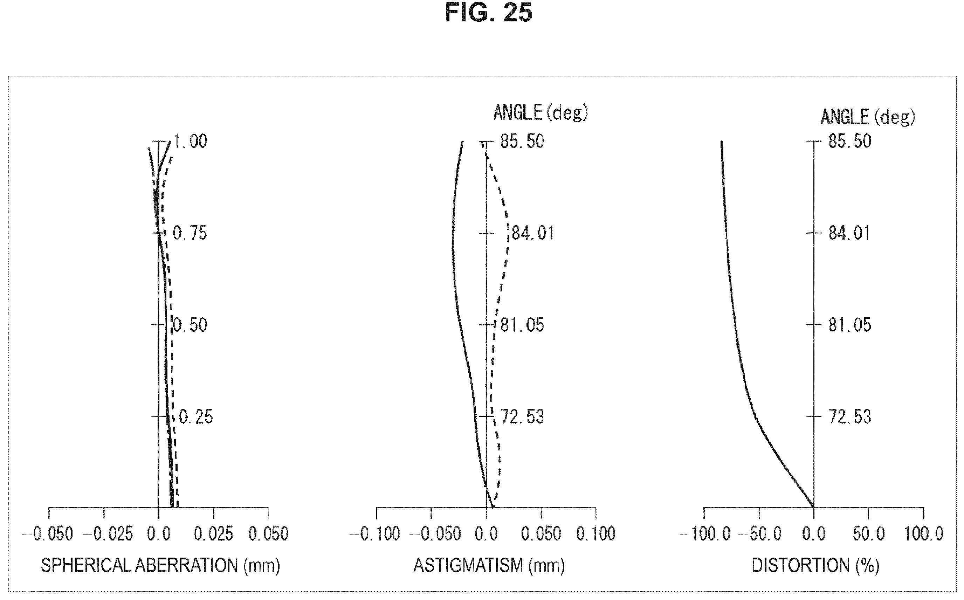

As described above, the imaging lens 21 in FIG. 22, which satisfies the conditions described in the outline of the present technology, has a small size and sufficient optical performance. FIG. 25 shows spherical aberration, astigmatism, and distortion of this imaging lens 21.

In FIG. 25, spherical aberration, astigmatism, and distortion are shown on the left side, at the center, and on the right side, respectively, in the figure. The notation method of FIG. 25 is similar to that of FIG. 5 and description thereof is omitted.

The spherical aberration, astigmatism, and distortion in FIG. 25 show that each aberration is excellently corrected in the imaging lens 21 and sufficient optical performance is obtained.

[Example configuration of imaging apparatus]

The present technology can be applied to general imaging apparatuses including an imaging lens, such as a mobile phone, a wearable camera, a digital still camera, and a video camera.

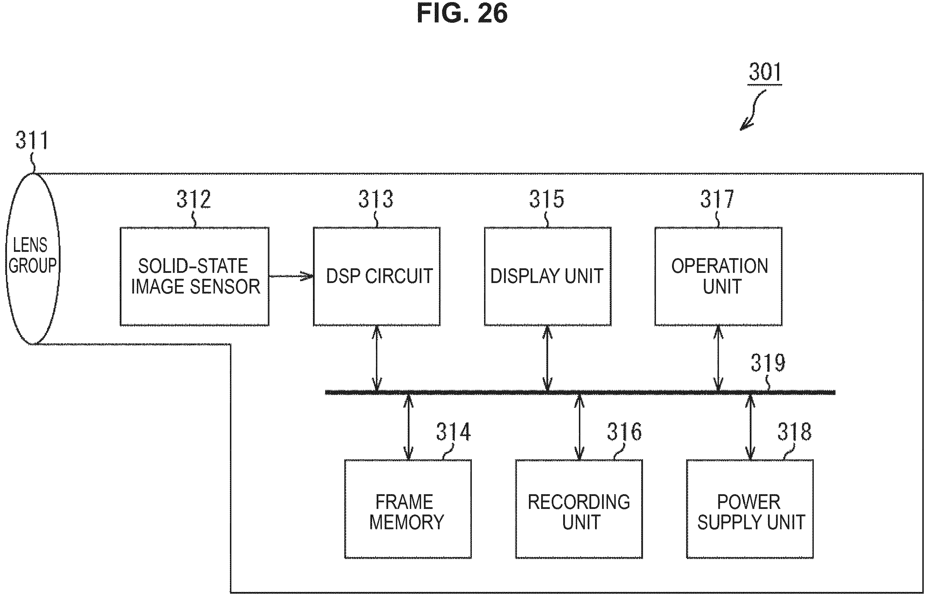

FIG. 26 is a view illustrating an example configuration of an imaging apparatus to which the present technology is applied.

An imaging apparatus 301 of FIG. 26 includes an optical unit 311 configured with a lens group or the like, a solid-state image sensor (imaging device) 312, and a digital signal processor (DSP) circuit 313, which is a camera signal processing circuit. The imaging apparatus 301 also includes a frame memory 314, a display unit 315, a recording unit 316, an operation unit 317, and a power supply unit 318. The DSP circuit 313, the frame memory 314, the display unit 315, the recording unit 316, the operation unit 317, and the power supply unit 318 are mutually connected via a bus line 319.

The optical unit 311 takes in incident light (image light) from a photographic subject, and forms an image on an imaging surface of the solid-state image sensor 312. The solid-state image sensor 312 converts the amount of incident light whose image is formed on the imaging surface by the optical unit 311 to electrical signals in units of pixels, and outputs the electrical signals as pixel signals. The optical unit 311 and the solid-state image sensor 312 correspond to the above-described camera module 11.

The display unit 315 is configured with, for example, a panel-type display device, such as a liquid crystal panel or an organic electro luminescence (EL) panel, and displays a moving image or a still image captured by the solid-state image sensor 312. The recording unit 316 records a moving image or a still image captured by the solid-state image sensor 312 on a recording medium, such as a video tape or a digital versatile disk (DVD).

The operation unit 317 issues, under control by a user, operation commands about various functions of the imaging apparatus 301. The power supply unit 318 supplies various types of power, which serve as operating power of the DSP circuit 313, the frame memory 314, the display unit 315, the recording unit 316, and the operation unit 317, to these supply targets as appropriate.

Note that embodiments of the present technology are not limited to the above-described embodiments, and various alterations may occur insofar as they are within the scope of the present technology.

Additionally, the present technology may also be configured as below.

[1] An imaging lens including:

a front group that is placed on an object side and includes at least one lens having negative refractive power and at least one lens having positive refractive power;
a rear group that is placed on an imaging surface side and includes at least one lens having negative refractive power; and
a diaphragm placed between the front group and the rear group,
wherein a shape of a lens surface closest to an imaging surface is an aspheric shape with an inflection point, and
wherein, when a maximum value of an Abbe number of the lens having negative refractive power included in the front group is $\nu_{max}$ and a minimum value of an Abbe number of the lens having positive refractive power included in the front group is $\nu_{min}$, a relation of

$$\nu_{max} - \nu_{min} > 14$$

is satisfied.

[2] The imaging lens according to [1],
wherein, when a distance on an optical axis from a surface vertex of a lens surface positioned closest to an object to the imaging surface is $\Sigma d$ and a focal length of a whole system of the imaging lens is f, a relation of

$$\Sigma d/f < 15$$

is satisfied.

[3] The imaging lens according to [1] or [2],
wherein, when a combined focal length of lenses that are positioned closer to the imaging surface than the diaphragm is is $f_s$ and a focal length of a whole system of the imaging lens is f, a relation of

$$0.5 < f_s/f < 5.0$$

is satisfied.

[4] The imaging lens according to any of [1] to [3], wherein a relation of

$$v_{max} - v_{min} > 14.4$$

is satisfied.

[5] The imaging lens according to [2], wherein a relation of

$$\Sigma d/f < 8.0$$

is satisfied.

[6] The imaging lens according to any of [1] to [5],
wherein a lens placed closest to the imaging surface is a lens having negative refractive power.

[7] The imaging lens according to any of [1] to [6],
wherein the lens surface closest to the imaging surface has a concave shape in a vicinity of an optical axis, and has a convex shape at a peripheral portion.

[8] The imaging lens according to any of [1] to [7],
wherein an angle of view of the imaging lens is 100 degrees or more.

[9] The imaging lens according to any of [1] to [8],
wherein the imaging lens includes six or more lenses.

[10] The imaging lens according to any of [1] to [9],
wherein a lens having an aspheric shape with an inflection point is formed of plastic.

[11] The imaging lens according to any of [1] to [10],
wherein a lens with a size equal to or smaller than a specific size is formed of plastic.

[12] The imaging lens according to any of [1] to [11],
wherein a lens with a size equal to or larger than a specific size is formed of glass.

Reference Signs List

11    camera module
21    imaging lens
23    image sensor
31    front group
32    diaphragm
33    rear group

Claims

1. An imaging lens comprising:

   a front group that is placed on an object side and includes at least one lens having negative refractive power and at least one lens having positive refractive power;
   a rear group that is placed on an imaging surface side and includes at least one lens having negative refractive power; and
   a diaphragm placed between the front group and the rear group,
   wherein a shape of a lens surface closest to an imaging surface is an aspheric shape with an inflection point, and
   wherein, when a maximum value of an Abbe number of the lens having negative refractive power included in the front group is $v_{max}$ and a minimum value of an Abbe number of the lens having positive refractive power included in the front group is $v_{min}$, a relation of

   $$v_{max} - v_{min} > 14$$

   is satisfied.

**2.** The imaging lens according to claim 1,
wherein, when a distance on an optical axis from a surface vertex of a lens surface positioned closest to an object to the imaging surface is Σd and a focal length of a whole system of the imaging lens is f, a relation of

$$\Sigma d / f < 15$$

is satisfied.

**3.** The imaging lens according to claim 1,
wherein, when a combined focal length of lenses that are positioned closer to the imaging surface than the diaphragm is is $f_s$ and a focal length of a whole system of the imaging lens is f, a relation of

$$0.5 < f_s / f < 5.0$$

is satisfied.

**4.** The imaging lens according to claim 1, wherein a relation of

$$v_{max} - v_{min} > 14.4$$

is satisfied.

**5.** The imaging lens according to claim 2, wherein a relation of

$$\Sigma d / f < 8.0$$

is satisfied.

**6.** The imaging lens according to claim 1,
wherein a lens placed closest to the imaging surface is a lens having negative refractive power.

**7.** The imaging lens according to claim 1,
wherein the lens surface closest to the imaging surface has a concave shape in a vicinity of an optical axis, and has a convex shape at a peripheral portion.

**8.** The imaging lens according to claim 1,
wherein an angle of view of the imaging lens is 100 degrees or more.

**9.** The imaging lens according to claim 1,
wherein the imaging lens includes six or more lenses.

**10.** The imaging lens according to claim 1,
wherein a lens having an aspheric shape with an inflection point is formed of plastic.

**11.** The imaging lens according to claim 1,
wherein a lens with a size equal to or smaller than a specific size is formed of plastic.

**12.** The imaging lens according to claim 1,
wherein a lens with a size equal to or larger than a specific size is formed of glass.

**13.** A camera module comprising an imaging lens, the imaging lens including

a front group that is placed on an object side and includes at least one lens having negative refractive power and at least one lens having positive refractive power,

a rear group that is placed on an imaging surface side and includes at least one lens having negative refractive power, and

a diaphragm placed between the front group and the rear group,

wherein a shape of a lens surface of the imaging lens closest to an imaging surface is an aspheric shape with an inflection point, and

wherein, when a maximum value of an Abbe number of the lens having negative refractive power included in the front group is $\nu_{max}$ and a minimum value of an Abbe number of the lens having positive refractive power included in the front group is $\nu_{min}$, a relation of

$$\nu_{max} - \nu_{min} > 14$$

is satisfied.

14. An imaging apparatus comprising an imaging lens, the imaging lens including

a front group that is placed on an object side and includes at least one lens having negative refractive power and at least one lens having positive refractive power,

a rear group that is placed on an imaging surface side and includes at least one lens having negative refractive power, and

a diaphragm placed between the front group and the rear group,

wherein a shape of a lens surface of the imaging lens closest to an imaging surface is an aspheric shape with an inflection point, and

wherein, when a maximum value of an Abbe number of the lens having negative refractive power included in the front group is $\nu_{max}$ and a minimum value of an Abbe number of the lens having positive refractive power included in the front group is $\nu_{min}$, a relation of

$$\nu_{max} - \nu_{min} > 14$$

is satisfied.

# FIG. 1

**FIG. 2**

EP 3 006 976 A1

## FIG. 3

| | SURFACE NUMBER | R | d | REFRACTIVE INDEX | ABBE NUMBER |
|---|---|---|---|---|---|
| LENS L1 | S1 | 9. 665 | 0. 857 | 1. 62299 | 58. 12 |
| | S2 | 2. 693 | 1. 186 | | |
| LENS L2 | S3 | −127. 710 | 0. 686 | 1. 48749 | 70. 44 |
| | S4 | 1. 273 | 1. 210 | | |
| LENS L3 | S5 | 2. 227 | 0. 720 | 1. 53460 | 56. 00 |
| | S6 | −2. 969 | 0. 387 | | |
| DIAPHRAGM | S7 | — | 0. 000 | | |
| LENS L4 | S8 | 2. 574 | 0. 826 | 1. 53460 | 56. 00 |
| | S9 | −0. 969 | 0. 025 | | |
| LENS L5 | S10 | −2. 940 | 0. 300 | 1. 63493 | 23. 90 |
| | S11 | 1. 815 | 0. 741 | | |
| LENS L6 | S12 | 3. 227 | 0. 612 | 1. 53460 | 56. 00 |
| | S13 | 2. 514 | 0. 435 | | |
| OPTICAL FILTER | S14 | ∞ | 0. 110 | 1. 51680 | 64. 20 |
| | S15 | ∞ | 0. 205 | | |

EP 3 006 976 A1

# FIG. 4

| | S5 | S6 | S8 | S9 | S10 | S11 | S12 | S13 |
|---|---|---|---|---|---|---|---|---|
| CURVATURE RADIUS R | 2.226665 | −2.96876264 | 2.573876 | −0.968914224 | −2.9400154 | 1.815067172 | 3.227052 | 2.513755 |
| CONIC CONSTANT(K) | −1.52402 | −4.859259452 | 0.113338 | 0.238194125 | 7.067104888 | −14.22855539 | 0 | −1.37055 |
| THIRD-ORDER COEFFICIENT(A) | 0 | 0 | 0 | 0 | 0 | 0 | 0 | 0 |
| FOURTH-ORDER COEFFICIENT(B) | −0.02864 | −0.008545235 | 0.02629 | 0.086244041 | −0.45146509 | −0.022059695 | −0.08825 | −0.07873 |
| FIFTH-ORDER COEFFICIENT(C) | 0 | 0 | 0 | 0 | 0 | 0 | 0 | 0 |
| SIXTH-ORDER COEFFICIENT(D) | −0.00178 | 0.01849512 | −0.35328 | −0.382114436 | 0.108948035 | 0.132770406 | 0.028776 | 0.018338 |
| SEVENTH-ORDER COEFFICIENT(E) | 0 | 0 | 0 | 0 | 0 | 0 | 0 | 0 |
| EIGHTH-ORDER COEFFICIENT(F) | 0.025146 | −0.006302727 | 1.197879 | 0.924298851 | −0.10550562 | −0.070449335 | −0.00641 | −0.00249 |
| NINTH-ORDER COEFFICIENT(G) | 0 | 0 | 0 | 0 | 0 | 0 | 0 | 0 |
| TENTH-ORDER COEFFICIENT(H) | 0 | 0 | −4.30723 | −1.291519855 | −0.55523075 | 0.002212406 | 0.000423 | 5.03E−06 |

EP 3 006 976 A1

# FIG. 5

EP 3 006 976 A1

**FIG. 6**

EP 3 006 976 A1

## FIG. 7

| | SURFACE NUMBER | R | d | REFRACTIVE INDEX | ABBE NUMBER |
|---|---|---|---|---|---|
| LENS L11 | S21 | 9.008 | 0.600 | 1.72916 | 54.68 |
| | S22 | 1.780 | 1.600 | | |
| LENS L12 | S23 | −3.609 | 1.118 | 1.48749 | 70.23 |
| | S24 | −4.519 | 0.040 | | |
| LENS L13 | S25 | 2.430 | 0.613 | 1.63493 | 23.90 |
| | S26 | 3.858 | 0.390 | | |
| DIAPHRAGM | S27 | − | 0.000 | | |
| LENS L14 | S28 | 1.328 | 0.600 | 1.5343 | 55.66 |
| | S29 | −1.523 | 0.030 | | |
| LENS L15 | S30 | −4.228 | 0.300 | 1.63493 | 23.90 |
| | S31 | 1.625 | 0.157 | | |
| LENS L16 | S32 | 16.280 | 0.613 | 1.5343 | 55.66 |
| | S33 | −1.589 | 0.503 | | |
| LENS L17 | S34 | −5.489 | 0.450 | 1.5343 | 55.66 |
| | S35 | 1.922 | 0.090 | | |
| OPTICAL FILTER | S36 | ∞ | 0.110 | 1.516798 | 64.20 |
| | S37 | ∞ | 0.640 | | |

EP 3 006 976 A1

## FIG. 8

| | S25 | S26 | S28 | S29 | S30 | S31 | S32 | S33 | S34 | S35 |
|---|---|---|---|---|---|---|---|---|---|---|
| CURVATURE RADIUS R | 2.430409 | 3.857597 | 1.328210 | −1.522575 | −4.227670 | 1.625402 | 16.280020 | −1.589091 | −5.488874 | 1.921747 |
| CONIC CONSTANT(K) | 0.000000 | 0.000000 | 0.000000 | 0.000000 | −10.000000 | 0.000000 | 0.000000 | 0.000000 | 0.000000 | 0.000000 |
| THIRD-ORDER COEFFICIENT(A) | 0.000000 | 0.000000 | 0.000000 | 0.000000 | 0.000000 | 0.000000 | 0.000000 | 0.000000 | −0.068696 | −0.120063 |
| FOURTH-ORDER COEFFICIENT(B) | −0.038816 | −0.085646 | −0.093467 | 0.038570 | −0.333236 | −0.220941 | 0.201294 | 0.193711 | −0.131899 | −0.231367 |
| FIFTH-ORDER COEFFICIENT(C) | 0.000000 | 0.000000 | 0.000000 | 0.000000 | 0.000000 | 0.000000 | 0.000000 | 0.000000 | 0.293660 | 0.182458 |
| SIXTH-ORDER COEFFICIENT(D) | −0.011665 | −0.004928 | −0.049272 | −0.391879 | 0.163594 | 0.120859 | −0.229940 | 0.182204 | −0.487722 | −0.001829 |
| SEVENTH-ORDER COEFFICIENT(E) | 0.000000 | 0.000000 | 0.000000 | 0.000000 | 0.000000 | 0.000000 | 0.000000 | 0.000000 | 0.695754 | −0.061793 |
| EIGHTH-ORDER COEFFICIENT(F) | 0.010502 | 0.057132 | −0.306413 | 0.078211 | −0.145960 | 0.248990 | 0.063317 | −0.192393 | −0.531058 | 0.011941 |
| NINTH-ORDER COEFFICIENT(G) | 0.000000 | 0.000000 | 0.000000 | 0.000000 | 0.000000 | 0.000000 | 0.000000 | 0.000000 | 0.167847 | 0.012224 |
| TENTH-ORDER COEFFICIENT(H) | 0.000000 | 0.000000 | −0.612339 | −0.212169 | 0.643420 | −0.175292 | 0.019668 | 0.057204 | −0.011013 | −0.005065 |

# FIG. 9

SPHERICAL ABERRATION (mm)

ASTIGMATISM (mm)

DISTORTION (%)

FIG. 10

## FIG. 11

| | SURFACE NUMBER | R | d | REFRACTIVE INDEX | ABBE NUMBER |
|---|---|---|---|---|---|
| LENS L21 | S41 | 12. 512 | 0. 600 | 1. 72916 | 54. 68 |
| | S42 | 1. 850 | 1. 600 | | |
| LENS L22 | S43 | −3. 762 | 1. 249 | 1. 53430 | 55. 66 |
| | S44 | −2. 114 | 0. 040 | | |
| LENS L23 | S45 | 2. 768 | 0. 623 | 1. 64240 | 18. 90 |
| | S46 | 2. 609 | 0. 390 | | |
| DIAPHRAGM | S47 | − | 0. 000 | | |
| LENS L24 | S48 | 1. 7249 | 0. 600 | 1. 53430 | 55. 66 |
| | S49 | −1. 4819 | 0. 030 | | |
| LENS L25 | S50 | 22. 3900 | 0. 300 | 1. 64240 | 18. 90 |
| | S51 | 1. 5305 | 0. 417 | | |
| LENS L26 | S52 | −20. 7533 | 0. 472 | 1. 53430 | 55. 66 |
| | S53 | −1. 6652 | 0. 247 | | |
| LENS L27 | S54 | −4. 2982 | 0. 450 | 1. 53430 | 55. 66 |
| | S55 | 2. 1778 | 0. 123 | | |
| OPTICAL FILTER | S56 | ∞ | 0. 110 | 1. 51680 | 64. 20 |
| | S57 | ∞ | 0. 640 | | |

EP 3 006 976 A1

# FIG. 12

| | S43 | S44 | S45 | S46 | S48 | S49 | S50 | S51 | S52 | S53 | S54 | S55 |
|---|---|---|---|---|---|---|---|---|---|---|---|---|
| CURVATURE RADIUS R | -3.76248 | -2.11368 | 2.76848 | 2.60942 | 1.72492 | -1.48194 | 22.38997 | 1.53045 | -20.75333 | -1.66518 | -4.29824 | 2.17782 |
| CONIC CONSTANT(K) | 0.00000 | 0.00000 | 0.00000 | 0.00000 | 0.00000 | 0.00000 | -10.00000 | 0.00000 | 0.00000 | 0.00000 | 0.00000 | 0.00000 |
| THIRD-ORDER COEFFICIENT(A) | 0.00000 | 0.00000 | 0.00000 | 0.00000 | 0.00000 | 0.00000 | 0.00000 | 0.00000 | 0.00000 | 0.00000 | -0.08612 | -0.12057 |
| FOURTH-ORDER COEFFICIENT(B) | -0.01964 | 0.05203 | -0.02482 | -0.11571 | -0.08960 | 0.09659 | -0.09647 | -0.16688 | 0.03934 | 0.18830 | -0.01498 | -0.15913 |
| FIFTH-ORDER COEFFICIENT(C) | 0.00000 | 0.00000 | 0.00000 | 0.00000 | 0.00000 | 0.00000 | 0.00000 | 0.00000 | 0.00000 | 0.00000 | 0.02772 | -0.09561 |
| SIXTH-ORDER COEFFICIENT(D) | 0.00776 | -0.01268 | 0.02939 | 0.13870 | -0.10234 | -0.26419 | 0.19419 | 0.30110 | -0.10959 | -0.01554 | -0.26440 | 0.30709 |
| SEVENTH-ORDER COEFFICIENT(E) | 0.00000 | 0.00000 | 0.00000 | 0.00000 | 0.00000 | 0.00000 | 0.00000 | 0.00000 | 0.00000 | 0.00000 | 0.83380 | -0.12939 |
| EIGHTH-ORDER COEFFICIENT(F) | -0.00142 | 0.00211 | -0.00860 | 0.01275 | 0.19249 | 0.19773 | -0.38316 | -0.25205 | 0.04018 | -0.30683 | -0.81584 | -0.07746 |
| NINTH-ORDER COEFFICIENT(G) | 0.00000 | 0.00000 | 0.00000 | 0.00000 | 0.00000 | 0.00000 | 0.00000 | 0.00000 | 0.00000 | 0.00000 | 0.33290 | 0.07388 |
| TENTH-ORDER COEFFICIENT(H) | 0.00000 | 0.00000 | 0.00000 | 0.00000 | -0.49607 | -0.24159 | 0.28055 | 0.07565 | -0.01108 | 0.00178 | -0.04981 | -0.01585 |

EP 3 006 976 A1

FIG. 13

# FIG. 14

EP 3 006 976 A1

# FIG. 15

| | SURFACE NUMBER | R | d | REFRACTIVE INDEX | ABBE NUMBER |
|---|---|---|---|---|---|
| LENS L31 | S61 | 8.398 | 0.600 | 1.51633 | 64.14 |
| | S62 | 1.749 | 1.600 | | |
| LENS L32 | S63 | −7.668 | 0.600 | 1.43875 | 94.95 |
| | S64 | 3.661 | 0.040 | | |
| LENS L33 | S65 | 2.243 | 0.500 | 1.80810 | 22.76 |
| | S66 | 3.010 | 0.390 | | |
| DIAPHRAGM | S67 | − | 0 | | |
| LENS L34 | S68 | 1.733 | 0.600 | 1.53430 | 55.66 |
| | S69 | −1.259 | 0.030 | | |
| LENS L35 | S70 | −2000.000 | 0.300 | 1.63493 | 23.90 |
| | S71 | 1.678 | 0.240 | | |
| LENS L36 | S72 | 19.145 | 1.000 | 1.53430 | 55.66 |
| | S73 | −0.593 | 0.050 | | |
| LENS L37 | S74 | −32.261 | 0.400 | 1.53430 | 55.66 |
| | S75 | 0.575 | 0.340 | | |
| OPTICAL FILTER | S76 | ∞ | 0.110 | 1.51680 | 64.20 |
| | S77 | ∞ | 0.640 | | |

EP 3 006 976 A1

**FIG. 16**

| | S68 | S69 | S70 | S71 | S72 | S73 | S74 | S75 |
|---|---|---|---|---|---|---|---|---|
| CURVATURE RADIUS R | 1.73272 | −1.25946 | −2000.00000 | 1.67815 | 19.14521 | −0.59279 | −32.26131 | 0.57479 |
| CONIC CONSTANT(K) | 0.00000 | 0.00000 | −10.00000 | −4.72551 | −10.00000 | −3.42727 | −0.90582 | −3.87744 |
| THIRD-ORDER COEFFICIENT(A) | 0.00000 | 0.00000 | 0.00000 | 0.00000 | 0.00000 | 0.00000 | −0.16571 | −0.29234 |
| FOURTH-ORDER COEFFICIENT(B) | −0.14591 | −0.62534 | −0.98651 | −0.28946 | 0.09316 | 0.07323 | 0.06565 | −0.44907 |
| FIFTH-ORDER COEFFICIENT(C) | 0.00000 | 0.00000 | 0.00000 | 0.00000 | 0.00000 | 0.00000 | 1.76863 | 2.41567 |
| SIXTH-ORDER COEFFICIENT(D) | −0.62454 | 2.48496 | 3.42677 | 0.68725 | −0.08957 | −0.12442 | −5.97162 | −4.04770 |
| SEVENTH-ORDER COEFFICIENT(E) | 0.00000 | 0.00000 | 0.00000 | 0.00000 | 0.00000 | 0.00000 | 9.27655 | 3.66916 |
| EIGHTH-ORDER COEFFICIENT(F) | 0.84490 | −5.99147 | −6.99396 | −0.65873 | 0.06632 | 0.07889 | −8.09008 | −1.94953 |
| NINTH-ORDER COEFFICIENT(G) | 0.00000 | 0.00000 | 0.00000 | 0.00000 | 0.00000 | 0.00000 | 3.76964 | 0.57247 |
| TENTH-ORDER COEFFICIENT(H) | −5.35697 | 2.80467 | 5.71097 | 0.29551 | −0.01441 | −0.00776 | −0.72219 | −0.07171 |

# FIG. 17

SPHERICAL ABERRATION (mm)

ASTIGMATISM (mm)

DISTORTION (%)

EP 3 006 976 A1

# FIG. 18

EP 3 006 976 A1

# FIG. 19

| | SURFACE NUMBER | R | d | REFRACTIVE INDEX | ABBE NUMBER |
|---|---|---|---|---|---|
| LENS L41 | S81 | 9. 464 | 0. 857 | 1. 71300 | 53. 94 |
| | S82 | 3. 429 | 1. 029 | | |
| LENS L42 | S83 | 9. 660 | 0. 686 | 1. 51680 | 64. 20 |
| | S84 | 1. 886 | 1. 114 | | |
| LENS L43 | S85 | −17. 407 | 1. 006 | 1. 63493 | 23. 90 |
| | S86 | −3. 497 | 0. 550 | | |
| DIAPHRAGM | S87 | − | 0. 000 | | |
| LENS L44/L45 | S88 | 2. 134 | 0. 720 | 1. 49700 | 81. 61 |
| | S89 | −1. 126 | 0. 356 | 1. 80518 | 25. 46 |
| | S90 | −1. 678 | 1. 215 | | |
| LENS L46 | S91 | −10. 732 | 0. 660 | 1. 63493 | 23. 90 |
| | S92 | 3. 581 | 0. 635 | | |
| OPTICAL FILTER | S93 | ∞ | 0. 189 | 1. 51680 | 64. 20 |
| | S94 | ∞ | 0. 411 | | |

EP 3 006 976 A1

## FIG. 20

|  | S85 | S86 | S91 | S92 |
|---|---|---|---|---|
| CURVATURE RADIUS R | −17.407370 | −3.497099 | −10.732232 | 3.581100 |
| CONIC CONSTANT(K) | −652.271985 | 0.582681 | 0.000000 | 2.565768 |
| THIRD-ORDER COEFFICIENT(A) | 0.000000 | 0.000000 | 0.000000 | 0.000000 |
| FOURTH-ORDER COEFFICIENT(B) | −0.044785 | 0.003408 | −0.206159 | −0.138574 |
| FIFTH-ORDER COEFFICIENT(C) | 0.000000 | 0.000000 | 0.000000 | 0.000000 |
| SIXTH-ORDER COEFFICIENT(D) | 0.011900 | 0.009017 | −0.044095 | 0.036644 |
| SEVENTH-ORDER COEFFICIENT(E) | 0.000000 | 0.000000 | 0.000000 | 0.000000 |
| EIGHTH-ORDER COEFFICIENT(F) | 0.001735 | 0.003861 | 0.034561 | −0.011166 |
| NINTH-ORDER COEFFICIENT(G) | 0.000000 | 0.000000 | 0.000000 | 0.000000 |
| TENTH-ORDER COEFFICIENT(H) | 0.000000 | 0.000000 | −0.068525 | 0.001735 |

# FIG. 21

SPHERICAL ABERRATION (mm)

ASTIGMATISM (mm)

DISTORTION (%)

EP 3 006 976 A1

FIG. 22

EP 3 006 976 A1

## FIG. 23

| | SURFACE NUMBER | R | d | REFRACTIVE INDEX | ABBE NUMBER |
|---|---|---|---|---|---|
| LENS L51 | S101 | 8.973 | 0.857 | 1.62299 | 58.12 |
| | S102 | 2.639 | 1.203 | | |
| LENS L52 | S103 | 15.445 | 0.686 | 1.48749 | 70.44 |
| | S104 | 1.198 | 1.390 | | |
| LENS L53 | S105 | 1.837 | 0.599 | 1.53460 | 56.00 |
| | S106 | −3.274 | 0.300 | | |
| DIAPHRAGM | S107 | − | 0 | | |
| LENS L54 | S108 | 2.775 | 0.785 | 1.53460 | 56.00 |
| | S109 | −0.978 | 0.025 | | |
| LENS L55 | S110 | −2.713 | 0.310 | 1.63493 | 23.90 |
| | S111 | 1.696 | 0.320 | | |
| LENS L56 | S112 | 21.573 | 0.400 | 1.53460 | 56.00 |
| | S113 | 301.014 | 0.141 | | |
| LENS L57 | S114 | 2.739 | 0.434 | 1.53460 | 56.00 |
| | S115 | 2.301 | 0.638 | | |
| OPTICAL FILTER | S116 | ∞ | 0.110 | 1.51680 | 64.20 |
| | S117 | ∞ | 0.003 | | |

EP 3 006 976 A1

**FIG. 24**

| | S105 | S106 | S108 | S109 | S110 | S111 | S112 | S113 | S114 | S115 |
|---|---|---|---|---|---|---|---|---|---|---|
| CURVATURE RADIUS R | 1.837454 | −3.274212 | 2.775231 | −0.977568 | −2.713431 | 1.695665 | 21.572704 | 301.014068 | 2.738853 | 2.300948 |
| CONIC CONSTANT(K) | −1.533222 | −0.214238 | 0.392733 | 0.449052 | 10.876666 | −14.275941 | 30.182132 | 24944.544215 | −0.709556 | −1.947258 |
| THIRD-ORDER COEFFICIENT(A) | 0.000000 | 0.000000 | 0.000000 | 0.000000 | 0.000000 | 0.000000 | 0.000000 | 0.000000 | 0.000000 | 0.000000 |
| FOURTH-ORDER COEFFICIENT(B) | −0.036347 | −0.022503 | 0.025066 | 0.136800 | −0.499334 | −0.033829 | 0.028534 | 0.023803 | −0.092575 | −0.080495 |
| FIFTH-ORDER COEFFICIENT(C) | 0.000000 | 0.000000 | 0.000000 | 0.000000 | 0.000000 | 0.000000 | 0.000000 | 0.000000 | 0.000000 | 0.000000 |
| SIXTH-ORDER COEFFICIENT(D) | −0.044434 | 0.019205 | −0.249853 | −0.467565 | 0.063186 | 0.115824 | −0.001377 | −0.007755 | 0.028306 | 0.020829 |
| SEVENTH-ORDER COEFFICIENT(E) | 0.000000 | 0.000000 | 0.000000 | 0.000000 | 0.000000 | 0.000000 | 0.000000 | 0.000000 | 0.000000 | 0.000000 |
| EIGHTH-ORDER COEFFICIENT(F) | 0.046956 | −0.006252 | 1.286995 | 0.902406 | −0.206120 | −0.084790 | −0.004016 | 0.002603 | −0.006145 | −0.003528 |
| NINTH-ORDER COEFFICIENT(G) | 0.000000 | 0.000000 | 0.000000 | 0.000000 | 0.000000 | 0.000000 | 0.000000 | 0.000000 | 0.000000 | 0.000000 |
| TENTH-ORDER COEFFICIENT(H) | 0.000000 | 0.000000 | −4.867663 | −1.349712 | −1.101098 | 0.024364 | 0.000058 | −0.000949 | 0.000466 | 0.000065 |

EP 3 006 976 A1

# FIG. 25

SPHERICAL ABERRATION (mm)

ASTIGMATISM (mm)

DISTORTION (%)

EP 3 006 976 A1

## FIG. 26

EP 3 006 976 A1

INTERNATIONAL SEARCH REPORT

**EP 3 006 976 A1**

International application No.

PCT/JP2014/063152

## A. CLASSIFICATION OF SUBJECT MATTER
*G02B13/04*(2006.01)i, *G02B13/18*(2006.01)i

According to International Patent Classification (IPC) or to both national classification and IPC

## B. FIELDS SEARCHED

Minimum documentation searched (classification system followed by classification symbols)
G02B13/04, G02B13/18

Documentation searched other than minimum documentation to the extent that such documents are included in the fields searched
Jitsuyo Shinan Koho     1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)
CODE V

## C. DOCUMENTS CONSIDERED TO BE RELEVANT

| Category* | Citation of document, with indication, where appropriate, of the relevant passages | Relevant to claim No. |
|---|---|---|
| X<br>A | WO 2010/001713 A1 (Konica Minolta Opto, Inc.),<br>07 January 2010 (07.01.2010),<br>entire text (particularly, examples 1 to 10;<br>paragraph [0139])<br>& JP 5282272 B       & US 2011/0102541 A1<br>& US 8654457 B2      & EP 2299306 A1 | 1-4,6-14<br>5 |
| X<br>A | JP 2009-288300 A (Fujinon Corp.),<br>10 December 2009 (10.12.2009),<br>entire text (particularly, examples 1 to 4;<br>paragraphs [0127], [0128], [0204])<br>& US 2009/0296234 A1   & CN 201289539 Y<br>& TWU 00M355391 | 1-4,6-14<br>5 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>04 August, 2014 (04.08.14) | Date of mailing of the international search report<br>12 August, 2014 (12.08.14) |
|---|---|
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/063152

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2006-309043 A (Nidec Copal Corp.),<br>09 November 2006 (09.11.2006),<br>entire text (particularly, examples 1, 2;<br>paragraphs [0017], [0019])<br>(Family: none) | 1-7,10,13-14<br>8-9,11-12 |
| X<br>A | JP 2013-3547 A (Fujifilm Corp.),<br>07 January 2013 (07.01.2013),<br>entire text (particularly, examples; paragraphs<br>[0095] to [0097])<br>(Family: none) | 1-4,6,8-14<br>5,7 |

Form PCT/ISA/210 (continuation of second sheet) (July 2009)

**EP 3 006 976 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003232998 A
- JP 2006209028 A